# EUROPEAN PATENT APPLICATION

(11) **EP 4 770 064 A1**
(43) Date of publication of application: **01.07.2026**
(21) Application number: 25731945.9
(22) Date of filing: 16.06.2025
(51) Int. Cl.: H04M 1/02, H05K 5/02, G06F 1/16, H01F 7/02

(54) **ELECTRONIC DEVICE INCLUDING MAGNET**

(30) Priority: 27.09.2024 KR 20240131421; 11.11.2024 KR 20240159149; 09.12.2024 KR 20240181768
(71) Applicant: Samsung Electronics Co., Ltd, Suwon-si, Gyeonggi-do 16677 (KR)
(72) Inventor: WOO, Jeong, Suwon-si, Gyeonggi-do 16677 (KR)
(74) Representative: HGF
(86) International application number: PCT/KR2025/008229
(87) International publication number: WO 2026/071389

(57) **Abstract**

According to an embodiment of the disclosure, an electronic device may include: a first housing; a second housing rotatably coupled to one side of the first housing and configured to rotate between a position facing the first housing and a position extended side by side with the one side of the first housing; a third housing rotatably coupled to the other side of the first housing and configured to rotate between a position facing the first housing and a position extended side by side with the other side of the first housing, while being disposed between the first housing and the second housing; a second battery disposed inside the second housing; a second magnetic module disposed inside the second housing and disposed to directly face or directly contact the second battery; a third battery disposed inside the third housing; and a third magnetic module disposed inside the third housing and positioned to directly face or directly contact the third battery. In an embodiment, when the third housing is disposed between the second housing and the first housing in a position facing the first housing, the second magnetic module and the third magnetic module may be configured to generate magnetic attraction. Various other embodiments may also be possible.

## Description

### [Technical Field]

An embodiment of the disclosure relates to an electronic device, for example, an electronic device including a magnet.

### [Background Art]

The term "electronic device", such as home appliances, electronic notes, portable multimedia players (PMPs), mobile communication terminals, tablet personal computers (PCs), video/audio devices, desktop/laptop computers, vehicle navigation systems, and so forth, may refer to a device that performs specific functions based on embedded programs. For example, such electronic devices may output stored information as sound or images. As the integration level of electronic devices increases and ultra-high-speed, large-capacity wireless communication becomes widespread, various functions may be mounted in a single electronic device such as a mobile communication terminal. For example, not only a communication function but also an entertainment function such as gaming, a multimedia function such as music or video playback, a communication and security function for mobile banking, or functions such as schedule management or an electronic wallet have been integrated into a single electronic device.

As the use of personal or portable communication devices, such as smartphones, becomes widespread, user demands for portability and ease of use are increasing. For example, a touchscreen display may serve as a screen, that is, an output device for outputting visual information, and may provide a virtual keypad that replaces mechanical input devices (e.g., button-type input devices). Accordingly, portable communication devices or electronic devices have become miniaturized while still being able to provide the same or even improved usability (e.g., a larger screen). On the other hand, with the commercialization of flexible displays, such as foldable or rollable displays, the portability and ease of use of electronic devices are expected to be further improved. For example, an electronic device including a flexible display may be carried in a folded or rolled state with a plurality of different structures (e.g., housings), and may provide a large screen in an unfolded state, thereby enhancing portability and ease of use.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problems]

According to an embodiment of the disclosure, an electronic device may include: a first housing; a second housing rotatably coupled to one side of the first housing and configured to rotate between a position facing the first housing and a position extended side by side with the one side of the first housing; a third housing rotatably coupled to the other side of the first housing and configured to rotate between a position facing the first housing while being disposed between the first housing and the second housing and a position extended side by side with the other side of the first housing; a battery disposed inside the second housing; a magnetic module disposed inside the second housing to directly face or directly contact the battery disposed inside the second housing; a battery disposed inside the third housing; and a magnetic module disposed inside the third housing to directly face or directly contact the battery disposed inside the third housing. In an embodiment, when the third housing is disposed between the second housing and the first housing to face the first housing, the magnetic module disposed inside the second housing and the magnetic module disposed inside the third housing may be configured to generate an attractive force.

According to an embodiment, an electronic device may include: a first housing; a second housing rotatably coupled to one side of the first housing and configured to rotate between a position facing one surface of the first housing and a position extended side by side with the one side of the first housing; a third housing rotatably coupled to the other side of the first housing and configured to rotate between a position facing the other surface of the first housing and a position extended side by side with the other side of the first housing; a first battery disposed inside the first housing; a first magnetic module disposed inside the first housing to directly face or directly contact the first battery; at least one second battery disposed inside at least one of the second housing and the third housing; and at least one second magnetic module disposed inside the at least one of the second housing and the third housing to directly face or directly contact the second battery. In an embodiment, when the at least one of the second housing and the third housing is disposed to face the first housing, the first magnetic module and the second magnetic module may be configured to generate an attractive force.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a perspective view of the electronic device in an unfolded state according to an embodiment of the disclosure;
FIG. 3 is a perspective view of the electronic device in an unfolded state according to an embodiment of the disclosure;
FIG. 4 is a perspective view of the electronic device in a folded state according to an embodiment of the disclosure;
FIG. 5 is an exploded view of the electronic device according to an embodiment of the disclosure;
FIG. 6 is a side view of the electronic device according to an embodiment of the disclosure;
FIG. 7 is a side view of the electronic device according to an embodiment of the disclosure;
FIG. 8 is a view illustrating the internal structure of the electronic device according to an embodiment of the disclosure;
FIG. 9 is a view illustrating the electronic device in a folded state according to an embodiment of the disclosure;
FIG. 10 is a cross-sectional view taken along line A-A' of FIG. 9, illustrating the electronic device according to an embodiment of the disclosure;
FIG. 11 is a view illustrating a state in which a second magnetic module is disposed in the electronic device according to an embodiment of the disclosure;
FIG. 12 is a view illustrating a state in which a third magnetic module is disposed in the electronic device according to an embodiment of the disclosure;
FIGS. 13 and 14 are views illustrating an operation of assembling the second magnetic module of the electronic device according to an embodiment of the disclosure;
FIGS. 15 and 16 are views illustrating an operation of assembling the third magnetic module of the electronic device according to an embodiment of the disclosure;
FIG. 17 is a perspective view illustrating a magnetic module of the electronic device according to an embodiment of the disclosure;
FIG. 18 is a plan view illustrating a magnetic module of the electronic device according to an embodiment of the disclosure;
FIG. 19 is a side view illustrating a magnetic module of the electronic device according to an embodiment of the disclosure;
FIGS. 20, 21, and 22 are perspective views illustrating various implementations of a magnetic module of the electronic device according to an embodiment of the disclosure;
FIG. 23 is a view illustrating the internal structure of the electronic device according to an embodiment of the disclosure;
FIG. 24 is a view illustrating the electronic device in a folded state according to an embodiment of the disclosure; and
FIG. 25 is a cross-sectional view taken along line B-B' of FIG. 24, illustrating the electronic device according to an embodiment of the disclosure.

Throughout the drawings, like reference numerals may be assigned to like parts, components, and/or structures.

### [Mode for the Invention]

A foldable-type electronic device may include a hinge assembly that rotatably connects (or couples) two different housings, thereby allowing relative movement or displacement between the two housings. The foldable-type electronic device may include three or more housings, in which case at least one of the housings may be understood to be rotatably coupled to two other housings. The hinge assembly may include a cam structure, a detent structure, and/or a serration structure, enabling the two housings to be maintained in a stationary state relative to each other at a position desired by the user. The stationary structure may allow the electronic device to reliably maintain at least a folded state. However, in a trend where electronic devices are increasingly being made thinner and/or lighter to enhance portability, it may be difficult to secure sufficient holding force using the hinge assembly. Furthermore, if the folded state is not stably maintained, user movement may cause the housings to unfold or external objects may interfere between the two housings, which may lead to damage to components such as the display or external deformation (e.g., dents).

An embodiment of the disclosure is intended to at least address the aforementioned problems and/or disadvantages and to at least provide the advantages described below, and may provide an electronic device capable of stably maintaining a folded state of a plurality of housings.

An embodiment of the disclosure may provide an electronic device capable of stably maintaining a folded state of the housings using magnets, while also enabling reliable positioning or support of batteries.

An embodiment of the disclosure may provide an electronic device capable of efficiently utilizing the internal space of housings by supporting the batteries with a magnetic module configured to maintain the folded state.

The technical problems to be solved by the present document are not limited to those mentioned above, and other technical problems not explicitly mentioned will be clearly understood by those of ordinary skill in the art based on the following description.

The following description of the accompanying drawings may provide an understanding of various exemplary implementations of the disclosure, including the claims and corresponding content. The exemplary embodiments disclosed in the following description include various specific details for the purpose of better understanding, but are considered as only one of many possible exemplary embodiments. Accordingly, it will be understood by those of ordinary skill in the art that various changes and modifications to the implementations described herein may be made without departing from the scope and spirit of the disclosure. In addition, for clarity and conciseness, descriptions of well-known functions and structures may be omitted.

The terms and words used in the following description and the claims are not limited to reference meanings but may be used to clearly and consistently describe an embodiment of the disclosure. Therefore, it is evident to those of ordinary skill in the art that the following description of various implementations is provided for illustrative purposes, not for the purpose of limiting the scope of the disclosure or equivalents thereof.

Unless clearly indicated otherwise by context, it should be understood that the singular forms "a," "an," and "the" include plural meanings. For example, "a surface of a component" may be understood to include one or more surfaces of the component.

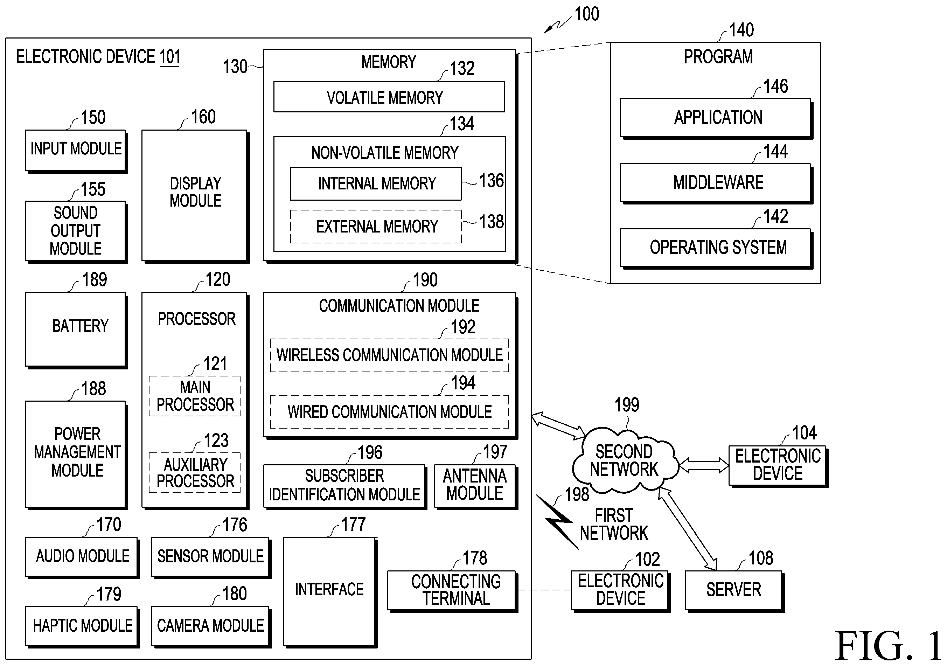

FIG. 1 is a block diagram illustrating an electronic device in a network environment 100 according to an embodiment of the disclosure. Referring to FIG. 1, the electronic device 101 in the network environment 100 may communicate with an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least portion of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as portion of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as portion of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as portion of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a second sensor module configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least portion of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local region network (LAN) or wide region network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other portions (e.g., radio frequency integrated circuit (RFIC)) than the radiator may be further formed as portion of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least portion of the function or the service. The one or more external electronic devices receiving the request may perform the at least portion of the function or the service requested, or an additional function or an additional service related to the request, and transfer an outcome of the performing to the electronic device 101. The electronic device 101 may provide the outcome, with or without further processing of the outcome, as at least portion of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "portion," or "circuitry". A module may be a single integral component, or a minimum unit or portion thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., internal memory 136 or external memory 138) that is leadable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium leadable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-leadable storage medium (e.g., compact disc lead only memory (CD-ROM)), or be distributed (e.g., downloaded or uploaded) online via an application store (e.g., Play StoreTM), or between two user devices (e.g., smartphones) directly. If distributed online, at least portion of the computer program product may be temporarily generated or at least temporarily stored in the machine-leadable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, the longitudinal direction, width direction, and/or thickness direction of the electronic device may be referred to, where the longitudinal direction may be defined as the "Y-axis direction," the width direction as the "X-axis direction," and/or the thickness direction as the "Z-axis direction." In an embodiment, with respect to the orientation of components, a Cartesian coordinate system as illustrated in the drawings may be used together with the indication of "negative/positive (-/+)" directions. For example, the front surface of the electronic device and/or housing may be defined as a surface facing the +Z direction, and the rear surface may be defined as a surface facing the -Z direction. In an embodiment, a side surface of the electronic device and/or housing may include a region facing the +X direction, a region facing the +Y direction, a region facing the -X direction, and/or a region facing the -Y direction. In an embodiment, the "X-axis direction" may be understood to include both the "-X direction" and the "+X direction." These definitions are based on the Cartesian coordinate system shown in the drawings for the sake of brevity of descriptions, and it should be noted that such references to directions or components do not limit the embodiments of the disclosure. For example, the Cartesian coordinate system may be defined differently from what is described herein depending on the design specifications of the electronic device or a user's usage habits. In the embodiments described below, depending on whether the electronic device is in a folded or unfolded state, the orientation or alignment of the second housing or the third housing may differ. In such cases, the Cartesian coordinate system illustrated in the drawings may be used as a reference.

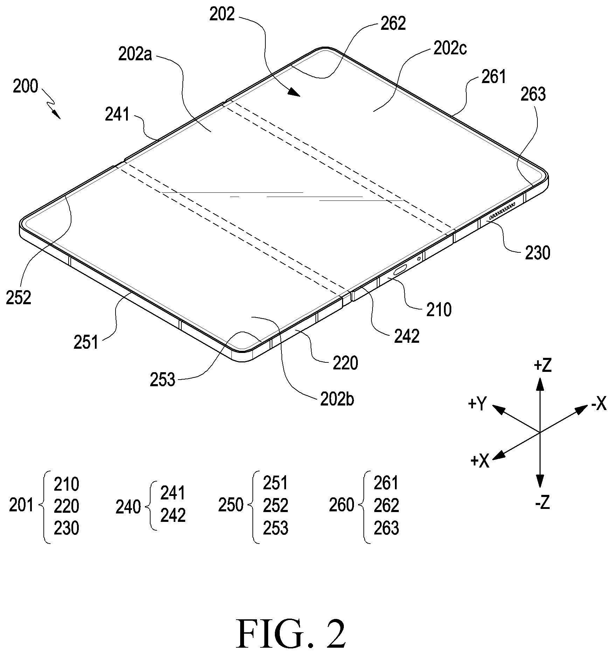

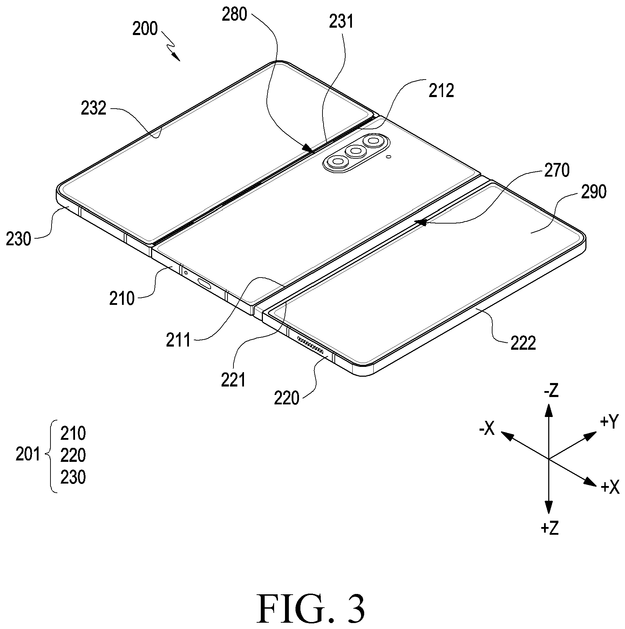

FIG. 2 is a perspective view of an electronic device 200 in an unfolded state according to an embodiment of the disclosure. FIG. 3 is a perspective view of the electronic device 200 in an unfolded state according to an embodiment of the disclosure. FIG. 2 may be an oblique view illustrating one surface (e.g., a front surface) of the electronic device 200, and FIG. 3 may be an oblique view illustrating the other surface (e.g., a rear surface) of the electronic device 200. The components described with reference to FIGS. 2 and 3 may be partially or entirely the same as those described with reference to FIG. 1. The components described with reference to FIGS. 2 and 3 may also be partially or entirely the same as those of the embodiments described below. As shown in FIGS. 2 and 3, the unfolded state of the electronic device 200 may be defined as a "first state."

According to an embodiment, the electronic device 200 may include a housing 201. The electronic device 200 may include a display 202. The housing 201 may define a space in which the display 202 is disposed. The display 202 may be a flexible display. For example, at least a portion of the display 202 may be foldable or rollable, and may be unfolded into a flat shape as shown in FIG. 2.

According to an embodiment, the housing 201 may include a first housing 210. The housing 201 may include a second housing 220. The housing 201 may include a third housing 230. The first housing 210 may be disposed between the second housing 220 and the third housing 230. For example, in the unfolded state, when the second housing 220 is defined as being disposed on one side of the first housing 210, the third housing 230 may be described as being disposed on the other side of the first housing 210. The second housing 220 may be rotatably coupled to the first housing 210. The third housing 230 may be rotatably coupled to the first housing 210. The display 202 may include a first display region 202a corresponding to the first housing 210, a second display region 202b corresponding to the second housing 220, and a third display region 202c corresponding to the third housing 230.

According to an embodiment, the electronic device 200 may include supports 240, 250, and 260. The supports 240, 250, and 260 may be disposed between the housing 201 and the display 202. The supports 240, 250, and 260 may be coupled to the housing 201 and may support the display 202. The supports 240, 250, and 260 may be arranged to surround the edge of the display 202. The supports 240, 250, and 260 may extend along the periphery of the housing 201. For example, the supports 240, 250, and 260 may suppress or prevent an edge portion of the display 202 from coming into direct contact with the housing 201. The supports 240, 250, and 260 may include a first support 240 disposed in the first housing 210, a second support 250 disposed in the second housing 220, and a third support 260 disposed in the third housing 230. The supports 240, 250, and 260 may be referred to as a "body." The supports 240, 250, and 260 may be referred to as a "frame." The supports 240, 250, and 260 may be referred to as a "sealing member." The supports 240, 250, and 260 may be referred to as a "peripheral part." The supports 240, 250, and 260 may be referred to as a "circumferential part." The supports 240, 250, and 260 may be referred to as a "peripheral structure." The supports 240, 250, and 260 may be referred to as a "circumferential structure." The supports 240, 250, and 260 may be disposed between the housings 210, 220, and 230 and the display 202. The supports 240, 250, and 260 may reduce friction between the housings 210, 220, and 230 and the display 202. The supports 240, 250, and 260 may also be referred to as "buffer members."

According to an embodiment, the supports 240, 250, and 260 may include a first support 240. The first support 240 may be disposed between the first housing 210 and the display 202 (e.g., the first display region 202a). The first support 240 may be arranged along the edge of the first housing 210. The first support 240 may include a (1-1)th support 241 and a (1-2)th support 242. At least a portion of the display 202 may be disposed between the (1-1)th support 241 and the (1-2)th support 242. The (1-1)th support 241 may be disposed at one end (e.g., an upper end) of the first housing 210, and the (1-2)th support 242 may be disposed at the other end (e.g., a lower end) of the first housing 210. Each of the first, second, and/or third supports 240, 250, and 260 may be referred to as a "support." The supports 240, 250, and 260 may also be referred to as a "deco," a "finishing member," or a "non-conductive member."

According to an embodiment, the supports 240, 250, and 260 may include a second support 250. The second support 250 may be disposed between the second housing 220 and the display 202 (e.g., the second display region 202b). The second support 250 may be arranged along the edge of the second housing 220. The second support 250 may include a (2-1)th support 251, a (2-2)th support 252, and a (2-3)th support 253. At least a portion of the display 202 may be disposed between the (2-2)th support 252 and the (2-3)th support 253. The (2-1)th support 251 may connect the (2-2)th support 252 and the (2-3)th support 253. The (2-1)th support 251 may extend along an edge (e.g., the edge 222 of FIG. 3) of the second housing 220. The (2-1)th support 251 may be disposed between the edge 222 of the second housing 220 and the display 202. The (2-1)th support 251 may be referred to as a "support frame" or a "first support frame." Each of the (2-2)th support 252 and the (2-3)th support 253 may be referred to as a "second support frame."

According to an embodiment, the supports 240, 250, and 260 may include a third support 260. The third support 260 may be disposed between the third housing 230 and the display 202 (e.g., the third display region 202c). The third support 260 may be arranged along the edge of the third housing 230. The third support 260 may include a (3-1)th support 261, a (3-2)th support 262, and a (3-3)th support 263. At least a portion of the display 202 may be disposed between the (3-2)th support 262 and the (3-3)th support 263. The (3-1)th support 261 may connect the (3-2)th support 262 and the (3-3)th support 263. The (3-1)th support 261 may extend along an edge (e.g., the edge 232 of FIG. 3) of the third housing 230. The (3-1)th support 261 may be disposed between the edge 232 of the third housing 230 and the display 202. The (3-1)th support 261 may be referred to as a "support frame" or a "first support frame." Each of the (3-2)th support 262 and the (3-3)th support 263 may be referred to as a "second support frame."

According to an embodiment, for ease of explanation, the positions or sections of the supports 240, 250, and 260 have been described separately; however, the supports 240, 250, and 260 may be arranged to substantially surround the display 202 in the form of a single frame or a closed loop. For example, the (1-1)th support 241 may connect the (2-2)th support 252 and the (3-2)th support 262, and the (1-2)th support 242 may connect the (2-3)th support 253 and the (3-3)th support 263. In an embodiment, the supports 240, 250, and 260 may be configured as separate structures from each other. For example, in regions adjacent to a first hinge 270 and/or a second hinge 280, the second support 250 may be spaced apart from the first support 240, and/or the third support 260 may be spaced apart from the first support 240. The shape or structure of the supports 240, 250, and 260 may be appropriately implemented according to the specifications of the actual electronic device to be manufactured.

According to an embodiment, the first housing 210 may include a (1-1)th side portion 211 and a (1-2)th side portion 212. The (1-1)th side portion 211 and the (1-2)th side portion 212 may respectively form opposite sides of the first housing 210. The second housing 220 may be coupled to the (1-1)th side portion 211. The third housing 230 may be coupled to the (1-2)th side portion 212. The (1-1)th side portion 211 may also be referred to as a "first coupling portion." The (1-2)th side portion 212 may be referred to as a "second coupling portion." The (1-1)th side portion 211 may also be referred to as a "first portion," and the (1-2)th side portion 212 may be referred to as a "second portion."

According to an embodiment, the second housing 220 may include a (2-1)th side portion 221 and a (2-2)th side portion 222. The (2-1)th side portion 221 and the (2-2)th side portion 222 may respectively form opposite sides of the second housing 220. The (2-1)th side portion 221 may be coupled to the first housing 210. The (2-2)th side portion 222 may form a side surface of the housing 201. The (2-2)th side portion 222 may also be referred to as an "edge." The (2-1)th side portion 221 may be referred to as a "third side portion," and the (2-2)th side portion 222 may be referred to as a "fourth side portion."

According to an embodiment, the third housing 230 may include a (3-1)th side portion 231 and a (3-2)th side portion 232. The (3-1)th side portion 231 and the (3-2)th side portion 232 may respectively form opposite sides of the third housing 230. The (3-1)th side portion 231 may be coupled to the first housing 210. The (3-2)th side portion 232 may form a side surface of the housing 201. The (3-2)th side portion 232 may also be referred to as an "edge." The (3-1)th side portion 231 may be referred to as a "fifth side portion," and the (3-2)th side portion 232 may be referred to as a "sixth side portion."

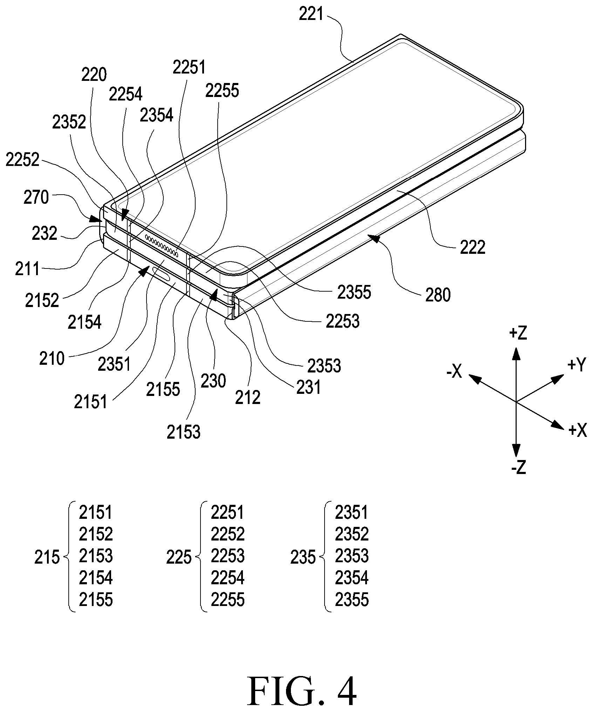

According to an embodiment, the electronic device 200 may include a first hinge 270 (e.g., the first hinge 270 of FIG. 4) and a second hinge 280 (e.g., the second hinge 280 of FIG. 4). The first hinge 270 may be disposed between the first housing 210 and the second housing 220. The first hinge 270 may be disposed between the (1-1)th side portion 211 and the (2-1)th side portion 221. The first hinge 270 may rotatably connect the first housing 210 and the second housing 220. The second hinge 280 may be disposed between the first housing 210 and the third housing 230. The second hinge 280 may be disposed between the (1-2)th side portion 212 and the (3-1)th side portion 231. The second hinge 280 may rotatably connect the first housing 210 and the third housing 230. In an embodiment, in the folded state of the electronic device 200, the (3-2)th side portion 232 may be disposed between the first housing 210 and the second housing 220. In an embodiment, in the folded state of the electronic device 200, the (3-2)th side portion 232 may be disposed adjacent to the first hinge 270.

FIG. 4 is a perspective view of the electronic device 200 in a folded state according to an embodiment of the disclosure. The components described with reference to FIG. 4 may be partially or entirely the same as those described with reference to FIGS. 1 to 3. The components described with reference to FIG. 4 may also be partially or entirely the same as those of the embodiments described below.

According to an embodiment, the second housing 220 may be rotated with respect to the first housing 210. For example, the second housing 220 may be rotated (or moved) with respect to the first housing 210 between a position facing the first housing 210 and a position extended side by side with one side of the first housing 210. The first hinge 270 may provide a rotation center for the second housing 220. The first hinge 270 may connect the (1-1)th side portion 211 and the (2-1)th side portion 221. The third housing 230 may be rotated with respect to the first housing 210. For example, the third housing 230 may be rotated (or moved) with respect to the first housing 210 between a position facing the first housing 210 and a position extended side by side with one side of the first housing 210. The second hinge 280 may provide a rotation center for the third housing 230. The second hinge 280 may connect the (1-2)th side portion 212 and the (3-1)th side portion 231.

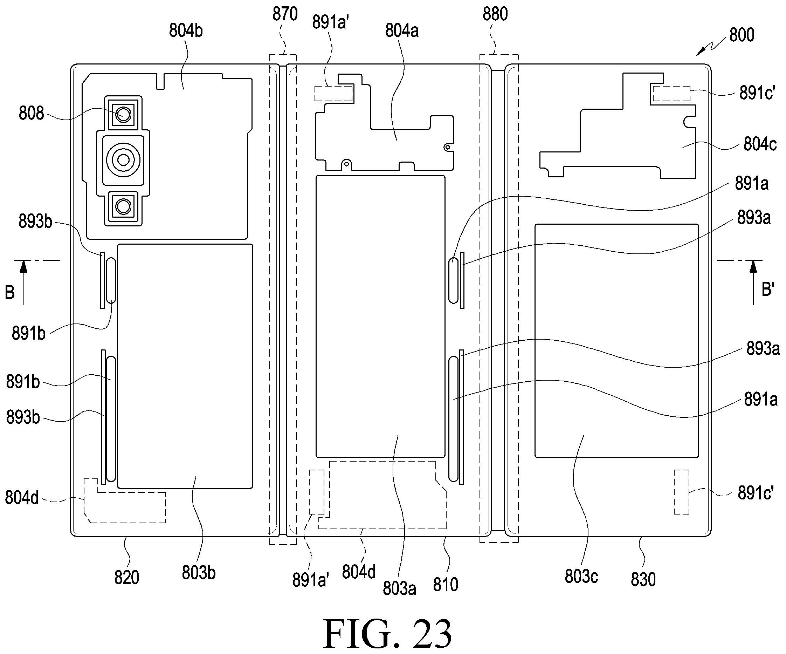

According to an embodiment, in the illustrated example, when the second housing 220 and the third housing 230 are in positions facing the first housing 210-e.g., in the folded state shown in FIG. 4-the third housing 230 may be substantially disposed between the first housing 210 and the second housing 220. In the structure where the third housing 230 is disposed between the first housing 210 and the second housing 220 in the folded state, the width of the first hinge 270 may be greater than the width of the second hinge 280. In an embodiment, as will be described with reference to FIGS. 23 to 25, the second housing 220 may be coupled to one side of the first housing 210, and the third housing 230 may be coupled to the other side of the first housing 210. In this structure, the second housing 220 may be foldable to face one surface of the first housing 210, and the third housing 230 may be foldable to face the other surface of the first housing 210.

According to an embodiment, in the folded state of the electronic device 200, each of the first, second, and/or third housings 210, 220, and 230 may be arranged or stacked in one direction (e.g., the Z-axis direction). For example, the third housing 230 may be disposed on the first housing 210, and the second housing 220 may be disposed on the third housing 230. For instance, the third housing 230 may be disposed between the first housing 210 and the second housing 220.

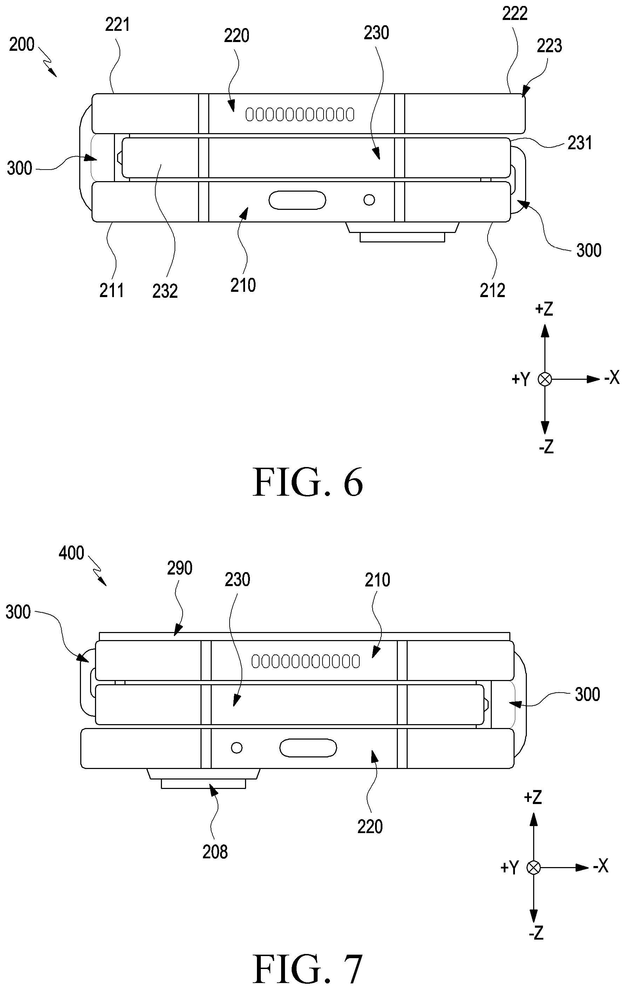

According to an embodiment, the electronic device 200 may include an antenna (e.g., the antenna 223 of FIG. 6). The antenna 223 may be formed at the edge 222 of the second housing 220. The antenna 223 may be integrated with the second housing 220 and may be a part of the edge 222. The antenna 223 may also be manufactured separately from the second housing 220 and coupled to the edge 222 of the second housing 220. The antenna 223 may be referred to as a "first conductive portion." The antenna 223 may include a metallic material. According to an embodiment, the edge 222 of the second housing 220 may correspond to a region of the second housing 220 that overlaps with a portion of the flexible display 202 that is not visible from the outside of the housing (e.g., the second housing 220) when viewing the flexible display 202 in a screen display direction (e.g., the +Z direction). For example, the edge 222 of the second housing 220 may include a bezel portion of the second housing 220 and the antenna 223.

According to an embodiment, the antenna 223 may include at least one of the electrically conductive portions that are mechanically connected by an electrically insulating material. Each of the electrically conductive portions may be spaced apart from one another along the edge 222 of the second housing 220. For example, two adjacent conductive portions among the electrically conductive portions may be electrically insulated from each other by the electrically insulating material while being mechanically connected. In an embodiment, even when electrically insulated from each other by the electrically insulating material, the two adjacent electrically conductive portions may form an electromagnetic coupling. In an embodiment, the electrically conductive portions that are electrically insulated from one another may function as radiating conductors for transmitting and receiving wireless signals.

According to an embodiment, the electronic device 200 may include a first antenna 215, a second antenna 225, and a third antenna 235. The first antenna 215 may form a portion of the first housing 210. The first antenna 215 may form at least a portion of the surface of the first housing 210. The second antenna 225 may form a portion of the second housing 220. The second antenna 225 may form at least a portion of the surface of the second housing 220. The third antenna 235 may form a portion of the third housing 230. The third antenna 235 may form at least a portion of the surface of the third housing 230.

According to an embodiment, the first antenna 215 may include a (1-1)th antenna portion 2151, a (1-2)th antenna portion 2152, and a (1-3)th antenna portion 2153. The (1-1)th antenna portion 2151 may be disposed between the (1-2)th antenna portion 2152 and the (1-3)th antenna portion 2153. The first antenna 215 may include a (1-1)th segmented portion 2154 and a (1-2)th segmented portion 2155. The (1-1)th antenna portion 2151 and the (1-2)th antenna portion 2152 may be spaced apart from each other, and the (1-1)th segmented portion 2154 may be disposed between the (1-1)th antenna portion 2151 and the (1-2)th antenna portion 2152. The (1-1)th antenna portion 2151 and the (1-3)th antenna portion 2153 may be spaced apart from each other, and the (1-2)th segmented portion 2155 may be disposed between the (1-1)th antenna portion 2151 and the (1-3)th antenna portion 2153. For example, in the first antenna 215, the segmented portions 2154 and 2155 may be disposed between two adjacent antenna portions among the antenna portions 2151, 2152, and 2153, and may provide an electrically insulating structure while also providing a mechanically connecting structure.

According to an embodiment, the second antenna 225 may include a (2-1)th antenna portion 2251, a (2-2)th antenna portion 2252, and a (2-3)th antenna portion 2253. The (2-1)th antenna portion 2251 may be disposed between the (2-2)th antenna portion 2252 and the (2-3)th antenna portion 2253. The second antenna 225 may include a (2-1)th segmented portion 2254 and a (2-2)th segmented portion 2255. The (2-1)th antenna portion 2251 and the (2-2)th antenna portion 2252 may be spaced apart from each other, and the (2-1)th segmented portion 2254 may be disposed between the (2-1)th antenna portion 2251 and the (2-2)th antenna portion 2252. The (2-1)th antenna portion 2251 and the (2-3)th antenna portion 2253 may be spaced apart from each other, and the (2-2)th segmented portion 2255 may be disposed between the (2-1)th antenna portion 2251 and the (2-3)th antenna portion 2253. For example, in the second antenna 225, the segmented portions 2254 and 2255 may be disposed between two adjacent antenna portions among the antenna portions 2251, 2252, and 2253, and may provide an electrically insulating structure while also providing a mechanically connecting structure.

According to an embodiment, the third antenna 235 may include a (3-1)th antenna portion 2351, a (3-2)th antenna portion 2352, and a (3-3)th antenna portion 2353. The (3-1)th antenna portion 2351 may be disposed between the (3-2)th antenna portion 2352 and the (3-3)th antenna portion 2353. The third antenna 235 may include a (3-1)th segmented portion 2354 and a (3-2)th segmented portion 2355. The (3-1)th antenna portion 2351 and the (3-2)th antenna portion 2352 may be spaced apart from each other, and the (3-1)th segmented portion 2354 may be disposed between the (3-1)th antenna portion 2351 and the (3-2)th antenna portion 2352. The (3-1)th antenna portion 2351 and the (3-3)th antenna portion 2353 may be spaced apart from each other, and the (3-2)th segmented portion 2355 may be disposed between the (3-1)th antenna portion 2351 and the (3-3)th antenna portion 2353. For example, in the third antenna 235, the segmented portions 2354 and 2355 may be disposed between two adjacent antenna portions among the antenna portions 2351, 2352, and 2353, and may provide an electrically insulating structure while also providing a mechanically connecting structure.

According to an embodiment, in the folded state of the electronic device 200, the first housing 210, the second housing 220, and the third housing 230 may be arranged to overlap with one another. For example, in the folded state of the electronic device 200, the first housing 210, the third housing 230, and the second housing 220 may be aligned in one direction (e.g., the +Z direction) in the stated order. In the folded state of the electronic device 200, the first antenna 215, the second antenna 225, and the third antenna 235 may be aligned with one another. For example, in the folded state of the electronic device 200, the first antenna 215, the third antenna 235, and the second antenna 225 may be aligned in one direction (e.g., the +Z direction) in the stated order. In the folded state of the electronic device 200, the first antenna 215, the second antenna 225, and the third antenna 235 may be aligned in the stacking direction (e.g., the +Z direction) of the housings 210, 220, and 230. For example, in the folded state of the electronic device 200, the (1-1)th antenna portion 2151, the (2-1)th antenna portion 2251, and the (3-1)th antenna portion 2351 may be aligned in a first direction (e.g., the +Z direction). For example, in the folded state of the electronic device 200, the (1-2)th antenna portion 2152, the (2-2)th antenna portion 2252, and the (3-2)th antenna portion 2352 may be aligned in the first direction (e.g., the +Z direction). For example, in the folded state of the electronic device 200, the (1-3)th antenna portion 2153, the (2-3)th antenna portion 2253, and the (3-3)th antenna portion 2353 may be aligned in the first direction (e.g., the +Z direction). For example, in the folded state of the electronic device 200, the (1-1)th segmented portion 2154, the (2-1)th segmented portion 2254, and the (3-1)th segmented portion 2354 may be aligned in the first direction (e.g., the +Z direction). For example, in the folded state of the electronic device 200, the (1-2)th segmented portion 2155, the (2-2)th segmented portion 2255, and the (3-2)th segmented portion 2355 may be aligned in the first direction (e.g., the +Z direction).

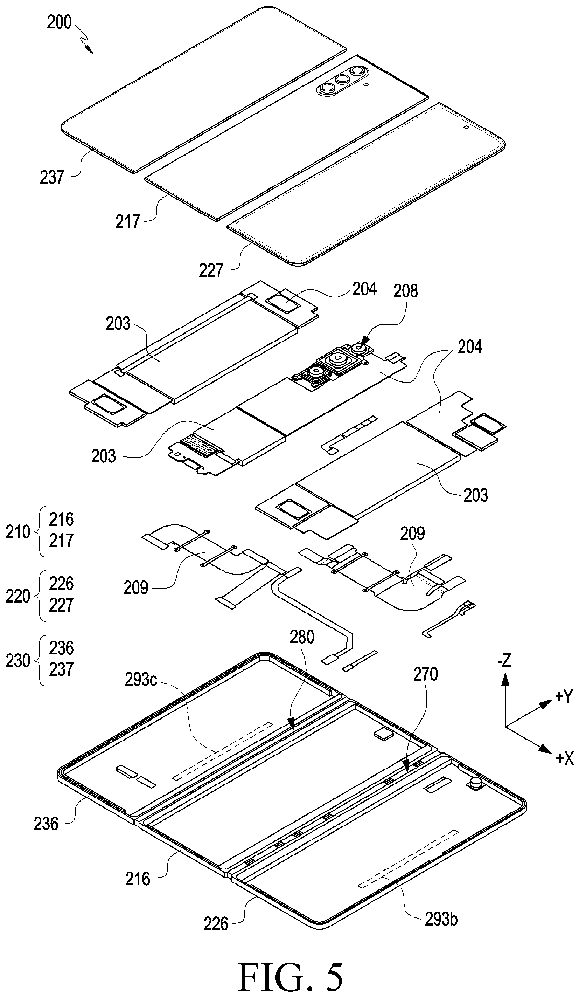

FIG. 5 is an exploded view illustrating a portion of the electronic device 200 according to an embodiment of the disclosure. In FIG. 5, the display (e.g., the display 202 of FIG. 2) is not shown. The components described with reference to FIG. 5 may be partially or entirely the same as those described with reference to FIGS. 1 to 4. The components described with reference to FIG. 5 may also be partially or entirely the same as those of the embodiments described below.

According to an embodiment, the first housing 210 may include a first housing body 216. The first housing 210 may include a first cover 217. The first housing body 216 and the first cover 217 may be coupled to each other. At least a portion of the display (e.g., the display 202 of FIG. 2) may be seated on the first housing body 216.

According to an embodiment, the second housing 220 may include a second housing body 226. The second housing 220 may include a second cover 227. The second housing body 226 and the second cover 227 may be coupled to each other. At least a portion of the display (e.g., the display 202 of FIG. 2) may be seated on the second housing body 226. The antenna (e.g., the antenna 223 of FIG. 4) may be a part of the second housing body 226.

According to an embodiment, the third housing 230 may include a third housing body 236. The third housing 230 may include a third cover 237. The third housing body 236 and the third cover 237 may be coupled to each other. At least a portion of the display (e.g., the display 202 of FIG. 2) may be seated on the third housing body 236.

According to an embodiment, the first hinge 270 may rotatably connect the first housing body 216 and the second housing body 226. The second hinge 280 may rotatably connect the first housing body 216 and the third housing body 236.

According to an embodiment, the electronic device 200 may include a battery 203. The battery 203 may supply power to electrical components of the electronic device 200 (e.g., the display 202, a second display 290, and a circuit board 204). The battery 203 may be disposed between the housing body 216, 226, or 236 and the cover 217, 227, or 237. The electronic device 200 may include a circuit board 204. The circuit board 204 may be electrically connected to electrical components of the electronic device 200 (e.g., the display 202, the second display 290, and the battery 203). The circuit board 204 may be disposed between the housing body 216, 226, or 236 and the cover 217, 227, or 237. The electronic device 200 may include a camera assembly 208. The camera assembly 208 may be disposed between the housing body 216, 226, or 236 and the cover 217, 227, or 237. The electronic device 200 may include a flexible circuit board 209. The flexible circuit board 209 may be connected to the circuit board 204. In an embodiment, the housing body 216, 226, or 236 may include a guide structure 293b or 293c for defining or distinguishing assembly positions of the battery 203 or the circuit board 204.

FIG. 6 illustrates the electronic device 200 as viewed from one direction (e.g., the +Y direction). FIG. 7 illustrates the electronic device 200 as viewed from one direction (e.g., the +Y direction) according to an embodiment of the disclosure. The components described with reference to FIGS. 6 and 7 may be partially or entirely the same as those described with reference to FIGS. 1 to 5. The components described with reference to FIGS. 6 and 7 may also be partially or entirely the same as those of the embodiments described below.

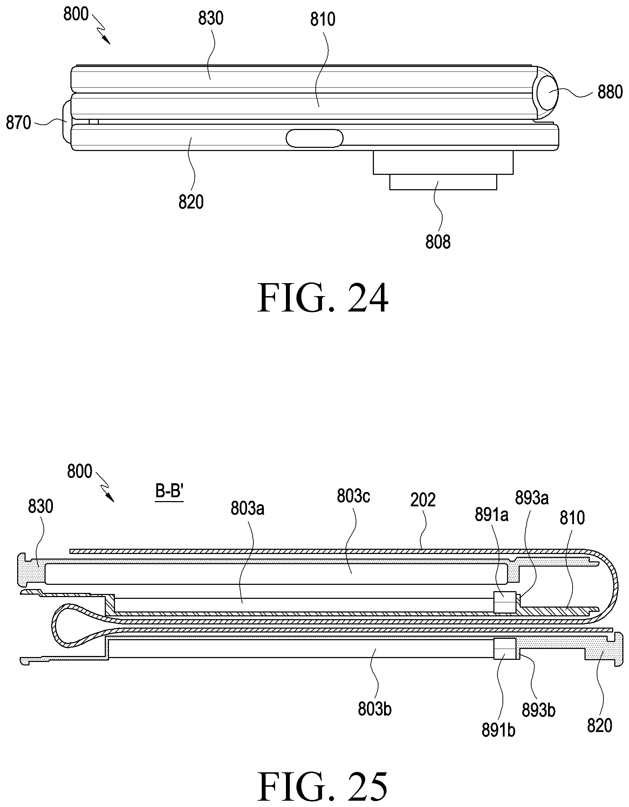

According to an embodiment, the electronic device 200 may include a first housing 210, a second housing 220, and a third housing 230. The first housing 210, the second housing 220, and the third housing 230 may be stacked in one direction (e.g., the +Z direction). The third housing 230 may be disposed between the first housing 210 and the second housing 220. In an embodiment, for example, as illustrated in FIG. 24, the second housing 220 may be foldable to face one surface of the first housing 210, and the third housing 230 may be foldable to face the other surface of the first housing 210. For example, when the electronic device 200 is in a folded state, the first housing 210 may be configured to be disposed between the second housing 220 and the third housing 230. In the structure in which the first housing 210 is disposed between the second housing 220 and the third housing 230 in the folded state, the widths of the first hinge 270 and the second hinge 280 of FIG. 5 may be substantially the same. The "widths of the first hinge 270 and the second hinge 280" referred to herein may be measured along the X-axis direction in the arrangement shown in FIG. 5.

According to an embodiment, in the embodiment of FIG. 6 or FIG. 7, one of the hinge assemblies 300 (e.g., the first hinge 270 of FIG. 5) may rotatably connect the first housing 210 and the second housing 220. Another one of the hinge assemblies 300 (e.g., the second hinge 280 of FIG. 5) may rotatably connect the first housing 210 and the third housing 230. In a structure in which the third housing 230 is disposed between the first housing 210 and the second housing 220 in the folded state, the width of the first hinge 270 may be greater than the width of the second hinge 280. The first hinge 270 may also be referred to as the "first hinge assembly" (e.g., the left hinge assembly among the hinge assemblies 300 of FIG. 6). The second hinge 280 may also be referred to as the "second hinge assembly" (e.g., the right hinge assembly among the hinge assemblies 300 of FIG. 6).

Referring to FIG. 7, the electronic device 400 may include a first housing 210, a second housing 220, and a third housing 230. The descriptions of the first, second, and/or third housings 210, 220, and 230 provided with reference to FIGS. 1 to 5 may apply equally to the first, second, and/or third housings 210, 220, and 230 of the electronic device 400. The electronic device 400 may further include a hinge assembly 300. The descriptions of the first hinge 270 or the second hinge 280 provided with reference to FIGS. 1 to 5 may apply equally to the descriptions of the hinge assembly 300.

Referring to FIG. 7, the electronic device 400 may include a camera assembly 208. The camera assembly 208 may be disposed in the second housing 220. The electronic device 400 may include a second display 290. The second display 290 may be disposed in the first housing 210. In the embodiments of FIGS. 3 to 6, a configuration in which the camera assembly 208 is disposed in the first housing 210 and the second display 290 is disposed in the second housing 220 may be exemplified. For example, in the folded state, if the housings can be arranged to face different directions, it should be noted that the housings in which the camera assembly 208 and/or the second display 290 are disposed are not limited to the disclosed embodiments, and FIG. 7 may illustrate the electronic device 400 having a configuration in which the camera assembly 208 is disposed in the second housing 220.

According to an embodiment, in the folded state of the electronic device 400, a portion of the camera assembly 208 may protrude outward from the second housing 220. However, the embodiments of the disclosure are not limited thereto, and the camera assembly 208 may be disposed in the first housing 210 or the second housing 220 in a state where it does not protrude outward, depending on the specifications of the electronic device 400. In the folded state of the electronic device 400, the second display 290 may be visually exposed to the outside of the first housing 210. For example, when the camera assembly 208 is directed toward a subject while the electronic device 400 is in the folded state, a user may perform image capturing while viewing a preview image through the second display 290.

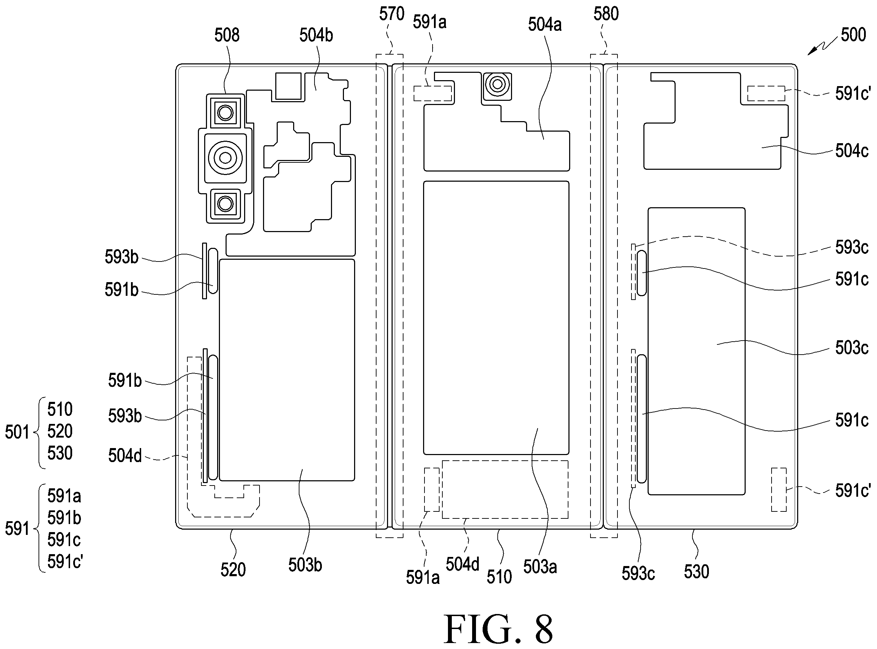

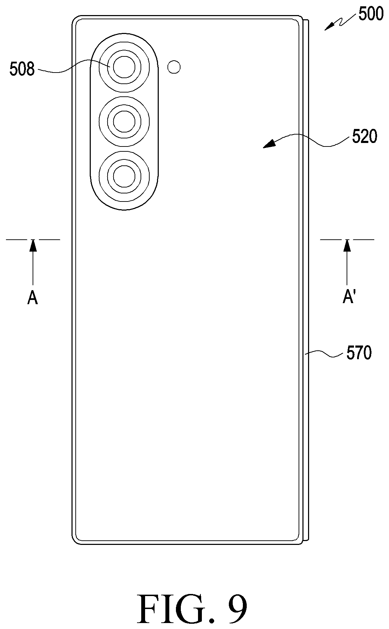

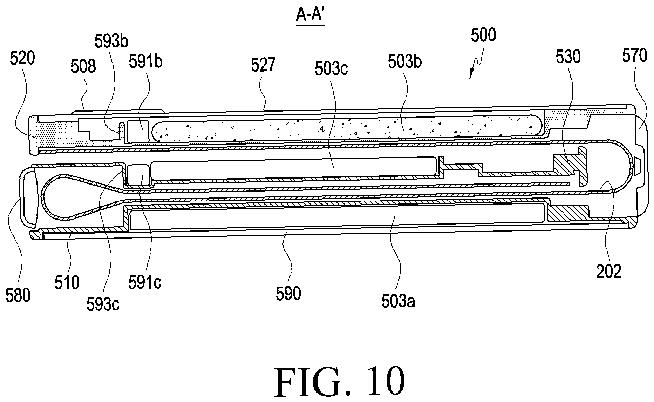

FIG. 8 is a view illustrating an internal structure of an electronic device 500 according to an embodiment of the disclosure. FIG. 9 illustrates the electronic device 500 in a folded state according to an embodiment of the disclosure. FIG. 10 is a cross-sectional view of the electronic device 500 taken along line A-A' of FIG. 9 according to an embodiment of the disclosure.

Referring to FIGS. 8 to 10, the electronic device 500 (e.g., the electronic devices 101, 200, and 400 illustrated in FIGS. 1 to 7) may be transformable between a folded state, in which different portions of the housing 501 overlap each other, and an unfolded state, in which the different portions of the housing 501 are extended side by side. Here, the term "unfolded state" or "a state of being unfolded" may refer to a state in which the different portions of the housing 501 are arranged to form a substantially flat plate shape. The descriptions of the electronic devices 101, 200, and 400 provided with reference to FIGS. 1 to 7 may equally apply to the description of the electronic device 500 of FIGS. 8 to 10. The electronic device 500 may include a housing 501, and the description of the housing 201 provided with reference to FIGS. 2 to 7 may equally apply to the description of the housing 501.

According to an embodiment, the housing 501 may include a first housing 510, a second housing 520, and/or a third housing 530. In an embodiment, the second housing 520 may be rotatably coupled to one side of the first housing 510 via a first hinge 570, and the third housing 530 may be rotatably coupled to the other side of the first housing 510 via a second hinge 580. In the illustrated embodiment, when the electronic device 500 is in a folded state, the third housing 530 may be disposed between the first housing 510 and the second housing 520. In an embodiment, when the electronic device 500 is in a folded state, it may be understood that the second housing 520 is disposed substantially facing the first housing 510 with the third housing 530 interposed therebetween. In an embodiment, because the display 202 (e.g., the display 202 of FIG. 2) is disposed on one surface of the housing 501, the display 202 may be arranged or aligned in a substantially flat plate shape when the electronic device 500 and/or the housing 501 is in the unfolded state, and may be folded or rolled in accordance with the shape of the housing 501 when the electronic device 500 and/or the housing 501 is in the folded state. Referring to the folded state of FIG. 10, the display 202 may be configured such that the region disposed on the third housing 530 (e.g., the third display region 202c of FIG. 2) may be aligned to face the region disposed on the first housing 510 (e.g., the first display region 202a of FIG. 2), and the region disposed on the second housing 520 (e.g., the second display region 202b of FIG. 2) may be arranged (or aligned) to face the rear surface of the third housing 530.

According to an embodiment, the electronic device 500 may include circuit boards 504a, 504b, 504c, and/or 504d and/or batteries 503a, 503b, and/or 503c, which are disposed in the first housing 510, the second housing 520, and/or the third housing 530. For example, the electronic device 500 may include a first circuit board 504a and a first battery 503a, which are accommodated in the first housing 510, a second circuit board 504b and a second battery 503b, which are accommodated in the second housing 520, and/or a third circuit board 504c and a third battery 503c, which are accommodated in the third housing 530. In an embodiment, depending on the manufacturing specifications of the electronic device 500 or the design of the internal space of the housing 501, the electronic device 500 may further include auxiliary circuit board(s) 504d. In the illustrated embodiment, the auxiliary circuit board(s) 504d may be respectively disposed in the first housing 510 and/or the second housing 520.

According to an embodiment, the electronic device 500 may further include a camera assembly 508 disposed in the first housing 510 or the second housing 520. In the illustrated embodiment, the camera assembly 508 may be understood to be disposed in the second housing 520. In an embodiment, when the camera assembly 508 is disposed in the second housing 520, the electronic device 500 may further include a second display 590 disposed in the first housing 510. When a portion of the display 202 (e.g., the first display region 202a of FIG. 2) is defined as being disposed on the front surface of the first housing 510, the second display 590 may be understood to be disposed on the rear surface of the first housing 510. For example, when the electronic device 500 is in a folded state, a user may capture a subject using the camera assembly 508 while viewing a preview image through the second display 590. In an embodiment, when other region(s) of the display 202 are defined as being disposed on the front surface of the second housing 520 and/or the front surface of the third housing 530, a second cover 527 (e.g., the second cover 227 of FIG. 5) may be disposed on the rear surface of the second housing 520, and a third cover (not shown) (e.g., the third cover 237 of FIG. 5) may be disposed on the rear surface of the third housing 530. In an embodiment, the second display 590 may function as a first cover (e.g., the first cover 217 of FIG. 5) disposed on the rear surface of the first housing 510.

According to an embodiment, the electronic device 500 may include magnetic module(s) 591 (e.g., 591a, 591b, 591c, and 591c') to stably maintain a folded state. For example, when the electronic device 500 is in a folded state, the magnetic module(s) 591 may generate an attractive force between two housings that directly face each other among the first housing 510, the second housing 520, and/or the third housing 530. In the illustrated embodiment, the magnetic module(s) 591 may be configured to generate an attractive force between the second housing 520 and the third housing 530 in the folded state. In an embodiment, the user may use the electronic device 500 in a state in which the second housing 520 is extended side by side with one side of the first housing 510, while maintaining a state in which the third housing 530 faces the first housing 510. In this case, magnetic module(s) (e.g., the magnetic module(s) indicated by reference numerals "591a" and "591c'") for generating an attractive force between the first housing 510 and the third housing 530 may be disposed.

The configuration or arrangement of the magnetic module(s) 591 will be further described. In distinguishing among the magnetic module(s) 591, ordinal numbers corresponding to the housings in which the respective magnetic modules are disposed may be assigned, regardless of the order in which the magnetic modules are mentioned. For example, it should be understood that the ordinal numbers assigned to the first to third housings 510, 520, and 530, or to the magnetic module(s) 591, are merely for clarity of description and distinction among similar components, and should not be interpreted as limiting the embodiment(s) of the disclosure.

According to an embodiment, the electronic device 500 may include second magnetic module(s) 591b disposed in the second housing 520 and/or third magnetic module(s) 591c disposed in the third housing 530. For example, when the electronic device 500 is in a folded state, the second magnetic module(s) 591b and the third magnetic module(s) 591c may generate an attractive force by being positioned adjacent to each other. When the electronic device 500 is in the folded state, the second magnetic module(s) 591b and the third magnetic module(s) 591c may generate an attractive force, thereby enabling the second housing 520 and/or the third housing 530 to stably maintain a state aligned to face the first housing 510. In an embodiment, when the third housing 530 is folded to face the first housing 510 and the second housing 520 is extended side by side with one side of the first housing 510, the second magnetic module(s) 591b and the third magnetic module(s) 591c may be aligned at positions that are substantially symmetrical with respect to the first hinge 570. For example, when the second housing 520 is folded to face the first housing 510 with the third housing 530 interposed therebetween, the second magnetic module(s) 591b may be disposed to face the third magnetic module(s) 591c. Accordingly, the electronic device 500 and/or the housing 501 may stably maintain the folded state by receiving the attractive force generated between the second magnetic module(s) 591b and the third magnetic module(s) 591c.

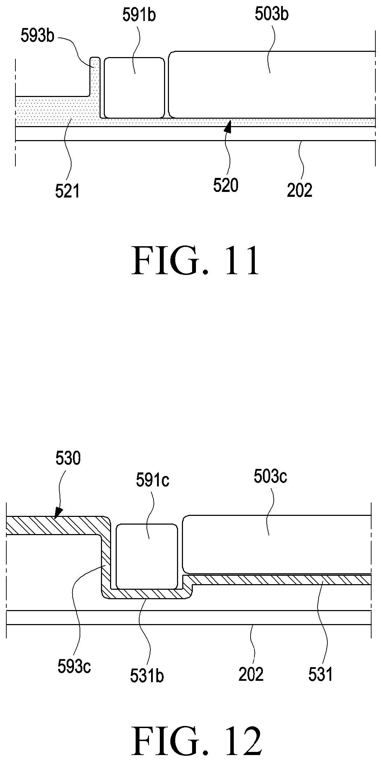

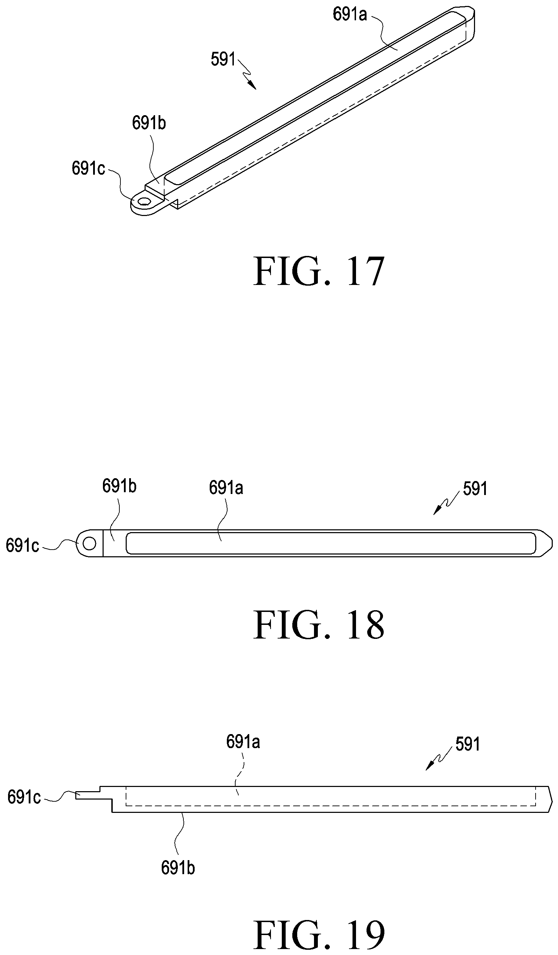

According to an embodiment, the second magnetic module(s) 591b and the third magnetic module(s) 591c may function as structures for supporting (or protecting) the second battery 503b or the third battery 503c. In an embodiment, the second magnetic module(s) 591b and the third magnetic module(s) 591c may function as structures for guiding the assembly positions of the second battery 503b or the third battery 503c. For example, the second magnetic module(s) 591b may be disposed to directly face or directly contact the second battery 503b, and the third magnetic module(s) 591c may be disposed to directly face or directly contact the third battery 503c. The configuration of the second magnetic module(s) 591b and the third magnetic module(s) 591c functioning as support structures or guide structures will be further described with reference to FIGS. 11 and 12. In an embodiment, the second magnetic module(s) 591b and the third magnetic module(s) 591c may be implemented as magnets themselves or as a combination of magnet(s) and a bracket. The magnetic module(s) 591 implemented as a combination of magnet(s) and a bracket will be described with reference to FIGS. 17 to 22.

According to an embodiment, the electronic device 500 may further include support wall(s) 593b and 593c configured to support the second magnetic module(s) 591b and the third magnetic module(s) 591c. When the support wall(s) 593b and 593c are provided, the second magnetic module(s) 591b may be disposed between the second battery 503b and the second support wall(s) 593b, and the third magnetic module(s) 591c may be disposed between the third battery 503c and the third support wall(s) 593c. For example, the second magnetic module(s) 591b may be combined with the second support wall(s) 593b among the support walls 593b and 593c to implement a structure supporting the second battery 503b, and the third magnetic module(s) 591c may be combined with the third support wall(s) 593c among the support walls 593b and 593c to implement a structure supporting the third battery 503c.

According to an embodiment, the electronic device 500 may further include first magnetic module(s) 591a disposed in the first housing 510 and/or fourth magnetic module(s) 591c' disposed in the third housing 530. The first magnetic module(s) 591a and the fourth magnetic module(s) 591c' may generate an attractive force to maintain a state in which the third housing 530 is disposed to face the first housing 510. In the illustrated embodiment, unlike the second or third magnetic module(s), the first magnetic module(s) 591a and/or the fourth magnetic module(s) 591c' may be disposed at a position spaced apart from the battery (e.g., the first battery 503a or the third battery 503c). In an embodiment, similar to the second magnetic module(s) 591b or the third magnetic module(s) 591c, the first magnetic module(s) 591a and/or the fourth magnetic module(s) 591c' may be disposed adjacent to (e.g., directly facing) the battery (e.g., the first battery 503a or the third battery 503c). In an embodiment, when the third housing 530 is extended side by side with the other side of the first housing 510, the first magnetic module(s) 591a and the fourth magnetic module(s) 591c' may be aligned at positions that are substantially symmetrical with respect to the second hinge 580. For example, when the third housing 530 is folded to face the first housing 510, the first magnetic module(s) 591a may be disposed to face the fourth magnetic module(s) 591c'. Accordingly, the third housing 530 may stably maintain a folded state facing the first housing 510 by receiving the attractive force generated between the first magnetic module(s) 591a and the fourth magnetic module(s) 591c'.

The following will describe the arrangement structure and/or the placement functioning as a support structure of the second magnetic module(s) 591b and the third magnetic module(s) 591c with reference to FIGS. 11 and 12. In an embodiment, the second magnetic module(s) 591b and the third magnetic module(s) 591c may be disposed to substantially directly face a battery (e.g., the second battery 503b or the third battery 503c). In an embodiment, the second magnetic module(s) 591b and the third magnetic module(s) 591c may be disposed to be in substantially direct contact with the battery. The arrangement structure of the second magnetic module(s) 591b and the third magnetic module(s) 591c as described below may be substantially identically applicable to the arrangement structure of the first magnetic module(s) 591a and the fourth magnetic module(s) 591c'. However, such an arrangement structure of the magnetic module(s) 591 is not limited to the disclosed embodiment(s), and the first magnetic module(s) 591a and the fourth magnetic module(s) 591c' may be disposed at positions spaced apart from the first battery 503a or the third battery 503c.

FIG. 11 illustrates the arrangement of the second magnetic module(s) 591b in the electronic device (e.g., the electronic device 500 shown in FIGS. 8 to 10) according to an embodiment of the disclosure.

Referring to FIG. 11, the electronic device 500 and/or the second housing 520 may further include a support plate (e.g., a second support plate 521). The second support plate 521 may be disposed, for example, between the display 202 and the second battery 503b and/or between the display 202 and the second magnetic module(s) 591b. For instance, when the display 202 is partially supported (or disposed) on one surface of the second support plate 521, the second battery 503b and/or the second magnetic module(s) 591b may be disposed on the other surface of the second support plate 521. In an embodiment, the second support plate 521 may include a second support wall 593b protruding from one surface and extending in a designated direction.

According to an embodiment, the second magnetic module(s) 591b may be disposed between the second support wall 593b and the second battery 503b. In an embodiment, the second magnetic module(s) 591b may be substantially fixed to the second support plate 521 and/or the second support wall 593b. In an embodiment, the second magnetic module(s) 591b may function as a structure for guiding the assembly position of the second battery 503b by being disposed on the second support plate 521 before the second battery 503b is assembled. In an embodiment, by being substantially fixed to the second support plate 521 and/or the second support wall 593b, the second magnetic module(s) 591b may function as a structure for supporting or protecting the second battery 503b inside the second housing 520.

The arrangement structure of the third magnetic module(s) 591c with reference to FIG. 12, as described below, may differ somewhat from the arrangement structure of the second magnetic module(s) 591b with reference to FIG. 11. In an embodiment, the arrangement structures shown in FIGS. 11 and 12 may be interchangeable. In an embodiment, the arrangement structures shown in FIGS. 11 and 12 may be combined and implemented in either the second housing 520 or the third housing 530.

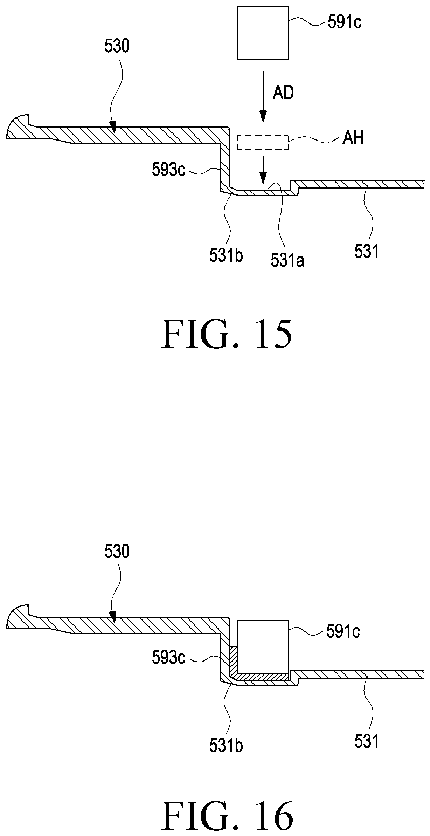

FIG. 12 is a view illustrating the arrangement of the third magnetic module(s) 591c in the electronic device (e.g., the electronic device 500 shown in FIGS. 8 to 10) according to an embodiment of the disclosure. In FIG. 12, reference numeral '531b' indicates a portion protruding from one surface of a support plate (e.g., a third support plate 531), which will be described with reference to FIG. 15 and/or FIG. 16.

Referring to FIG. 12, the electronic device 500 and/or the third housing 530 may further include a support plate (e.g., a third support plate 531). The third support plate 531 may be disposed, for example, between the display 202 and the third battery 503c and/or between the display 202 and the third magnetic module(s) 591c. For instance, when the display 202 is partially disposed in a direction facing one surface of the third support plate 531, the third battery 503c and/or the third magnetic module(s) 591c may be disposed in a direction facing the other surface of the third support plate 531. In an embodiment, similar to the second support plate 521, the third support plate 531 may include a third support wall 593c that protrudes from one surface and extends in a designated direction. In the illustrated embodiment, the third support wall 593c may be provided by a bent shape or stepped shape of the third support plate 531.

According to an embodiment, the third magnetic module(s) 591c may be disposed between the third support wall 593c and the third battery 503c. In an embodiment, the third magnetic module(s) 591c may be substantially fixed to the third support plate 531 and/or the third support wall 593c. In an embodiment, the third magnetic module(s) 591c may function as a structure for guiding the assembly position of the third battery 503c by being disposed on the third support plate 531 before the third battery 503c is assembled. In an embodiment, by being substantially fixed to the third support plate 531 and/or the third support wall 593c, the third magnetic module(s) 591c may function as a structure for supporting or protecting the third battery 503c inside the third housing 530.

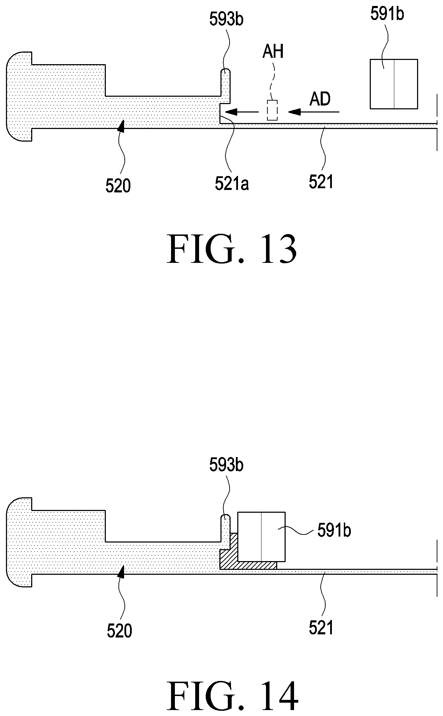

FIGS. 13 and 14 are views illustrating an operation of assembling the second magnetic module(s) 591b of the electronic device (e.g., the electronic device 500 shown in FIGS. 8 to 10) according to an embodiment of the disclosure.

Referring to FIGS. 13 and 14, when the second magnetic module(s) 591b are disposed in the second housing 520, a second guide groove 521a may be provided in a support plate (e.g., a second support plate 521) and/or a support wall (e.g., a second support wall 593b). In the illustrated embodiment, the second guide groove 521a may be understood as being formed in the second support wall 593b. In an embodiment, the second guide groove 521a may, for example, accommodate at least a portion of the second magnetic module(s) 591b. In an embodiment, when the second magnetic module(s) 591b are disposed in the second housing 520, an adhesive AH may substantially fix the second magnetic module(s) 591b to the second housing 520 via the second guide groove 521a. In an embodiment, by providing the second guide groove 521a, the adhesive AH may substantially fix the second magnetic module(s) 591b to the second support plate 521 and/or the second support wall 593b, while suppressing contamination of the interior of the second housing 520 in regions outside the intended bonding area. In the illustrated embodiment, the arrow 'AD' in FIG. 13 may indicate an assembly direction of the second magnetic module(s) 591b. When the second guide groove 521a is formed in the second support wall 593b, the assembly direction AD of the second magnetic module(s) 591b may be substantially the same as the direction in which gravity acts.

FIGS. 15 and 16 are views illustrating an operation of assembling the third magnetic module(s) 591c in the electronic device (e.g., the electronic device 500 shown in FIGS. 8 to 10) according to an embodiment of the disclosure.

Referring to FIGS. 15 and 16, when the third magnetic module(s) 591c are disposed in the third housing 530, a third guide groove 531a may be provided in a support plate (e.g., a third support plate 531) and/or a support wall (e.g., a third support wall 593c). In the illustrated embodiment, the third guide groove 531a may be understood as being formed in the third support plate 531. In an embodiment, the third guide groove 531a may accommodate, for example, at least a portion of the third magnetic module(s) 591c. In an embodiment, when the third magnetic module(s) 591c are disposed in the third housing 530, an adhesive AH may substantially fix the third magnetic module(s) 591c to the third housing 530 on the third guide groove 531a. In an embodiment, by providing the third guide groove 531a, the adhesive AH may substantially fix the third magnetic module(s) 591c to the third support plate 531 and/or the third support wall 593c while suppressing contamination of the internal space of the third housing 530 in regions outside the intended bonding area. In the illustrated embodiment, the arrow 'AD' in FIG. 15 may indicate an assembly direction of the third magnetic module(s) 591c. When the third guide groove 531a is formed in the third support plate 531, the assembly direction AD of the third magnetic module(s) 591c may be substantially the same as the direction in which gravity acts. In an embodiment, the third guide groove 531a may be implemented by a bent shape of the third support plate 531. For example, when the third support plate 531 is bent to provide the third guide groove 531a on one surface, a third protruding portion 531b may be formed on the opposite surface of the third support plate 531. For instance, the third guide groove 531a and the third protruding portion 531b may be formed on different surfaces of the third support plate 531 at corresponding positions.

FIG. 17 is a perspective view illustrating a magnetic module 519 (e.g., the magnetic module(s) 591 of FIG. 8 or FIG. 10) of an electronic device (e.g., the electronic device 500 of FIGS. 8 to 10) according to an embodiment of the disclosure. FIG. 18 is a plan view illustrating a magnetic module 591 of the electronic device 500 according to an embodiment of the disclosure. FIG. 19 is a side view illustrating a magnetic module 591 of the electronic device 500 according to an embodiment of the disclosure.

Referring to FIGS. 17 to 18, a magnetic module 591 (e.g., the second magnetic module(s) 591b and/or the third magnetic module(s) 591c of FIGS. 10 to 16) may include at least one magnet 691a and a bracket 691b. In an embodiment, the magnetic module 591 may be provided in the form of the at least one magnet 691a itself. When the at least one magnet 691a alone is implemented as the magnetic module 591, the at least one magnet 691a may be attached to the second housing 520 and/or the third housing 530 of FIGS. 10 to 16. In the illustrated embodiment, the magnetic module 591 may be understood as being disposed or fixed to the second housing 520 and/or the third housing 530 with at least one magnet 691a via the bracket 691b.

According to an embodiment, the at least one magnet 691a may include a monopole magnet or a dipole magnet. When the electronic device 500 is in the folded state, the second magnetic module(s) 591b and the third magnetic module(s) may be arranged such that magnets having opposite polarities face each other. For example, when the second and third magnetic modules include a monopole magnet or a dipole magnet, they may be arranged to generate an attractive force in the folded state of the electronic device. In an embodiment, depending on the specifications of the magnetic module 591, a plurality of magnets may be disposed on a single bracket. The illustrated embodiment may be understood as a configuration in which a single magnet 691a is disposed on a single bracket 691b.

According to an embodiment, the bracket 691b may be made of a synthetic resin or a metal material and may be coupled to at least partially surround the at least one magnet 691a. For example, when made of a synthetic resin, the bracket 691b may be molded to surround at least a portion of the magnet simultaneously during insert injection molding. In an embodiment, there may be difficulties in machining at least one magnet 691a into a shape suitable for the internal space of the second housing 520 or the third housing 530. The bracket 691b may provide an environment for forming the shape of the magnetic module 591 to fit within the assembly space allowed inside the second housing 520 or the third housing 530, for example. In an embodiment, the bracket 691b may provide an environment for stably positioning or fixing at least one magnet within the assembly space allowed inside the second housing 520 or the third housing 530. In an embodiment, a coupling piece 691c may be provided at at least one end of the bracket 691b, whereby the magnetic module 591 may be more securely fixed to the second housing 520 or the third housing 530.

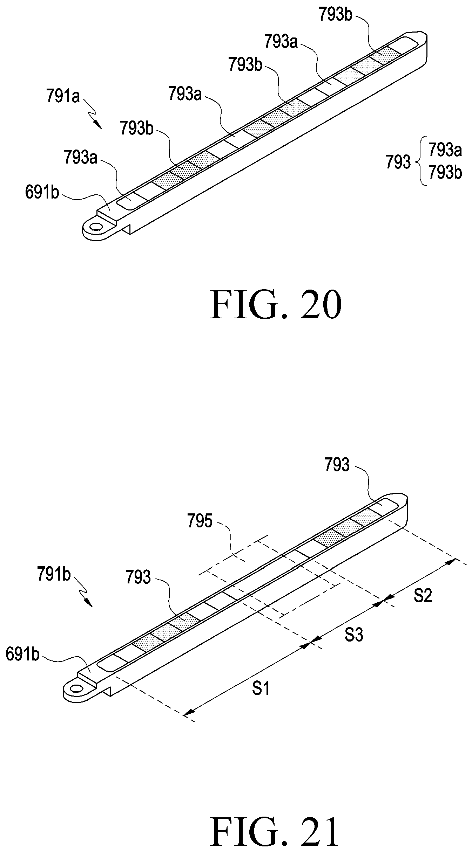

Figs. 20, 21, and 22 are perspective views illustrating various implementations of magnetic modules 791a, 791b, and 791c (e.g., the magnetic module(s) 591 of Figs. 8 or 10) of an electronic device (e.g., the electronic device 500 of Figs. 8 to 10) according to an embodiment of the disclosure.

Referring to Figs. 20 to 22, the magnetic modules 791a, 791b, and 791c may include at least one magnet 793 and a bracket 691b. In an embodiment, in the magnetic modules 791a, 791b, and 791c of Figs. 20 to 22, the bracket 691b (or the coupling piece 691c of Fig. 17) may be similar to or substantially the same as the bracket shown in Figs. 17 to 19. In an embodiment, at least one magnet 793 may be a Halbach array magnet. The term "Halbach array magnet" may refer to, for example, a magnet in which the polarity of magnets is arranged according to a specified rule to concentrate a magnetic field or magnetic force in a designated direction. In an embodiment, the Halbach array magnet (e.g., the magnet 793 in Fig. 20) may be formed by combining first magnet(s) 793a having a first polarity and second magnet(s) 793b having a second polarity and arranging them according to a specified rule to implement a Halbach array. For example, a single Halbach array magnet may be disposed in one bracket 691b to form the magnetic modules 791a, 791b, and 791c shown in Figs. 20 to 22, or a plurality of magnets may be arranged in a Halbach array in one bracket 691b to form the magnetic modules 791a, 791b, and 791c shown in Figs. 20 to 22.

According to an embodiment, in some sections on the bracket 691b, at least one magnet 793 may not be disposed. Referring to FIG. 21, Halbach array magnets 793 may be disposed in a first section S1 and a second section S2 of the bracket 691b, and a third section S3 located between the first section S1 and the second section S2 may be implemented as an empty space. When the magnetic module 791b of FIG. 21 is disposed inside the second housing 520 or the third housing 530, the third section S3 of the magnetic module 791b may be utilized as a space for accommodating electronic components. The illustrated embodiment may illustrate that a flexible printed circuit board 795 is disposed in the third section S3 of the magnetic module 791b.

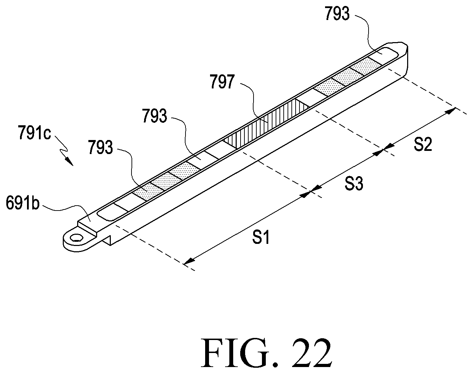

According to an embodiment, when a portion of the bracket 691b, for example, the third section S3, is implemented as an empty space, the magnetic module 791c may further include a dummy member 797 disposed in the third section S3, as illustrated in the embodiment of FIG. 22. The dummy member 797 may be disposed in the third section S3 to supplement the mechanical strength of the bracket 691b and/or the magnetic module 791c, for example. In an embodiment, the dummy member 797 may have a smaller thickness (or height) than the Halbach array magnets 793. For example, even when the dummy member 797 is disposed, a portion of the third section S3 may remain as an empty space between the Halbach magnets 793. When the dummy member 797 is disposed in a portion of the third section S3 and the remaining portion remains as an empty space, the third section S3 may be utilized as a space for accommodating other electronic components, such as the flexible printed circuit board 795 shown in FIG. 21.

FIG. 23 is a view illustrating the internal configuration of an electronic device 800 (e.g., the electronic devices 101, 200, and 400 of FIGS. 1 to 7) according to an embodiment of the disclosure. FIG. 24 is a view illustrating a folded state of an electronic device 500 according to an embodiment of the disclosure. FIG. 25 is a cross-sectional view taken along line B-B' of Fig. 24, illustrating the electronic device 500 in the folded state according to an embodiment of the disclosure.

The electronic device 800 shown in FIGS. 23 to 25 may be similar to the electronic devices 200 and 300 shown in FIGS. 2 to 10, but may differ in that, in the folded state, the second housing 820 is disposed to face one side of the first housing 810, and the third housing 830 is disposed on the other side of the first housing 810. In describing the electronic device illustrated in FIGS. 23 to 25, detailed descriptions of some components may be omitted, and the omitted components may be easily understood with reference to the electronic devices 200 and 300 shown in FIGS. 2 to 10.

Referring to FIGS. 23 to 25, the electronic device 800 may be transformable between a folded state, in which different portions of the housing 801 are overlapped, and an unfolded state, in which the different portions of the housing 801 are aligned side by side. Here, the term "unfolded state" or "a state of being unfolded" may refer to a state in which the different portions of the housing 801 are arranged to form a substantially flat plate shape. The descriptions of the electronic devices 101, 200, and 400 provided with reference to FIGS. 1 to 10 may be equally applicable to the descriptions of the electronic device 800 of FIGS. 23 to 25. The electronic device 800 may include the housing 801, and the descriptions of the housing 201 or 501provided with reference to FIGS. 2 to 10 may be equally applicable to the description of the housing 801.

According to an embodiment, the housing 801 may include a first housing 810, a second housing 820, and/or a third housing 830. In an embodiment, the second housing 820 may be rotatably coupled to one side of the first housing 810 via a first hinge 870, and the third housing 830 may be rotatably coupled to the other side of the first housing 810 via a second hinge 880. In the illustrated embodiment, when the electronic device 800 is in a folded state, the first housing 810 may be disposed between the second housing 820 and the third housing 830. For example, the second housing 820 may be folded to face one surface of the first housing 810, and the third housing 830 may be folded to face the other surface of the first housing 810. In an embodiment, when the electronic device 800 is in a folded state, the second housing 820 may be understood as being arranged to face the third housing 830 with the first housing 810 interposed therebetween.

According to an embodiment, as the display 202 is disposed on one surface of the housing 801, the electronic device 800 and/or the housing 801 may be arranged in a substantially flat plate shape when in an unfolded state, and may be folded or rolled in accordance with the shape of the housing 801 when in a folded state. Referring to the folded state in FIG. 25, the display 202 may be understood such that a region disposed on the first housing 810 (e.g., the first display region 202a of FIG. 2) is aligned to face a region disposed on the second housing 820 (e.g., the second display region 202b of FIG. 2), and a region disposed on the third housing 830 (e.g., the third display region 202c of FIG. 2) may be visually exposed to the external space.

According to an embodiment, the electronic device 800 may include circuit boards 804a, 804b, 804c, 804d and/or batteries 803a, 803b, 803c that are disposed in the first housing 810, second housing 820, and/or third housing 830. For example, the electronic device 800 may include a first circuit board 804a and a first battery 803a, which are accommodated in the first housing 810, a second circuit board 804b and a second battery 803b, which are accommodated in the second housing 820, and/or a third circuit board 804c and a third battery 803c, which are accommodated in the third housing 830. In an embodiment, depending on the manufacturing specifications of the electronic device 800 or the design of the internal space of the housing 801, the electronic device 800 may further include auxiliary circuit boards 804d. In the illustrated embodiment, the auxiliary circuit board(s) 804d may be respectively disposed in the first housing 810 and/or the second housing 820.

According to an embodiment, the electronic device 800 may further include a camera assembly 808 disposed in the first housing 810 or the second housing 820. In the illustrated embodiment, the camera assembly 808 may be understood to be disposed in the second housing 820. For example, when the electronic device 800 is in the folded state, a user may capture a subject using the camera assembly 808 while viewing a preview image through a portion of the display 202 (e.g., a region disposed in the third housing 830 and visually exposed to the outside space).

According to an embodiment, the electronic device 800 may include magnetic modules 891a, 891a', 891b, and 891c' to stably maintain a folded state. For example, when the electronic device 800 is in the folded state, the magnetic modules 891a, 891a', 891b, and/or 891c' may generate an attractive force between two housings that directly face each other among the first housing 810, second housing 820, and/or third housing 830. In the illustrated embodiment, the magnetic modules 891a, 891a', 891b, and/or 891c' may be configured to generate attractive forces between the first housing 810 and the second housing 820, and/or between the first housing 810 and the third housing 830.

According to an embodiment, the electronic device 800 may include (1-1)th magnetic module(s) 891a disposed in the first housing 810 and second magnetic module(s) 891b disposed in the second housing 820. For example, when the electronic device 800 is in the folded state, the (1-1)th magnetic module(s) 891a and the second magnetic module(s) 891b may generate an attractive force by being positioned adjacent to each other. When the electronic device 800 is in the folded state, the (1-1)th magnetic module(s) 891a and the second magnetic module(s) 891b may generate an attractive force, thereby allowing the first housing 810 and/or the second housing 820 to stably maintain a state in which they are aligned facing each other. In an embodiment, the third housing 830 may include third magnetic module(s) 891c'. When the third magnetic module(s) 891c' are disposed in the third housing 830, (1-2)th magnetic module(s) 891a' may be disposed in the first housing 810. For example, when the electronic device 800 is in a folded state, the (1-2)th magnetic module(s) 891a' may be aligned adjacent to the third magnetic module(s) 891c', thereby allowing the first housing 810 and/or the third housing 830 to stably maintain a state in which they are aligned facing each other.

According to an embodiment, the (1-1)th magnetic module(s) 891a and the second magnetic module(s) 891b may function as structures for supporting (or protecting) the first battery 803a or the second battery 803b. In an embodiment, the (1-1)th magnetic module(s) 891a and the second magnetic module(s) 891b may function as structures for guiding assembly positions of the first battery 803a or the second battery 803b. For example, the (1-1)th magnetic module(s) 891a may be disposed to directly face or directly contact the first battery 803a, and the second magnetic module(s) 891b may be disposed to directly face or directly contact the second battery 803b. The configurations of the (1-1)th magnetic module(s) 891a and the second magnetic module(s) 891b, functioning as support structures or guide structures, and the configurations of the support walls 893a and 893b, may be similar to or substantially the same as those described in the embodiments with reference to FIGS. 11 to 22.

As described above, the electronic device(s) according to the embodiment(s) of the disclosure (e.g., the electronic devices 101, 200, 400, 500, and 800 in FIGS. 1 to 10 and/or FIGS. 23 to 25) may include at least one magnet and/or at least one magnetic module (e.g., the magnetic modules 591a, 591b, 591c, 591c', 891a, 891a', 891b, and 891c' in FIGS. 8, 10, 23, and/or 25), and may stably maintain a folded state of a plurality of housings (or different portions of a housing) (e.g., the first housing 510, 810, the second housing 520, 820, and/or the third housing 530, 830 in FIGS. 8, 10, 23, and/or 25). In an embodiment, the magnet(s) and/or magnetic module(s) may function as structures for stably disposing or supporting a battery (e.g., the batteries 503a, 503b, 503c, 803a, 803b, and 803c illustrated in FIGS. 8, 10, 23, and/or 25), thereby enhancing the reliability of the electronic device. In an embodiment, by substantially replacing structures for stably disposing or supporting the battery or batteries with the magnet(s) and/or magnetic module(s), it is possible to suppress a reduction in battery capacity and/or prevent a decrease in the available mounting space for other component(s). For example, the utilization efficiency of the internal space of the housing(s) may be improved in the electronic device(s) according to the embodiment(s) of the disclosure.

The effects achievable through the disclosure are not limited to those explicitly mentioned above. Other effects, though not specifically described herein, may be clearly understood by those skilled in the art based on the disclosed embodiment(s).

According to an embodiment of the disclosure, an electronic device (e.g., the electronic devices 101, 200, 400, and 500 of FIGS. 1 to 10) may include: a first housing (e.g., the first housing 510 of FIGS. 8 and/or 10); a second housing (e.g., the second housing 520 of FIGS. 8 and/or 10) rotatably coupled to one side of the first housing and configured to rotate between a position facing the first housing and a position extended side by side with the one side of the first housing; a third housing (e.g., the third housing 530 of FIGS. 8 and/or 10) rotatably coupled to the other side of the first housing and configured to rotate between a position facing the first housing and a position extended side by side with the other side of the first housing, while being positioned between the first housing and the second housing; a battery disposed inside the second housing (e.g., the second battery 503b of FIGS. 8 and/or 10); a magnetic module disposed inside the second housing (e.g., the second magnetic module 591b of FIGS. 8 and/or 10) to directly face or directly contact the battery disposed inside the second housing; a battery disposed inside the third housing (e.g., the third battery 503c of FIGS. 8 and/or 10); and a magnetic module disposed inside the third housing (e.g., the third magnetic module 591c of FIGS. 8 and/or 10) to directly face or directly contact the battery disposed inside the third housing. In an embodiment, when the third housing is disposed between the second housing and the first housing to face the first housing, the magnetic module disposed inside the second housing and the magnetic module disposed inside the third housing may be configured to generate an attractive force.

According to an embodiment of the disclosure, an electronic device may include: a first housing ; a second housing rotatably coupled to one side of the first housing and configured to rotate between a position facing the first housing and a position extended side by side with the one side of the first housing; a third housing rotatably coupled to the other side of the first housing and configured to rotate between a position facing the first housing and a position extended side by side with the other side of the first housing, while being positioned between the first housing and the second housing; a battery disposed inside the second housing; a magnetic module disposed inside the second housing to directly face or directly contact the battery disposed inside the second housing; a battery disposed inside the third housing; and a magnetic module disposed inside the third housing to directly face or directly contact the battery disposed inside the third housing. In an embodiment, when the third housing is disposed between the second housing and the first housing to face the first housing, the second housing is held against the third housing by a magnetic force generated between the magnetic module disposed inside the second housing and the magnetic module disposed inside the third housing.

According to an embodiment, the magnetic module disposed inside the second housing may be located adjacent to the battery disposed inside the second housing. According to an embodiment, the magnetic module disposed inside the second housing may be arranged to support the battery disposed inside the second housing. According to an embodiment, the magnetic module disposed inside the second housing may be arranged to resist a movement of the battery disposed inside the second housing with respect to the second housing.

According to an embodiment, the magnetic module disposed inside the third housing may be located adjacent to the battery disposed inside the third housing. According to an embodiment, the magnetic module disposed inside the third housing may be arranged to support the battery disposed inside the third housing. According to an embodiment, the magnetic module disposed inside the third housing may be arranged to resist a movement of the battery disposed inside the third housing with respect to the third housing.

According to an embodiment, the second housing or the third housing may include a plate-shaped support plate (e.g., the support plates 521 and 531 of FIGS. 11 to 16). In an embodiment, the magnetic module disposed inside the second housing and the battery disposed inside the second housing, or the magnetic module disposed inside the third housing and the battery disposed inside the third housing, may be disposed on the support plate.

According to an embodiment, the second housing or the third housing may further include an adhesive (e.g., the adhesive AH of FIG. 15) disposed between the magnetic module disposed inside the second housing and the support plate, or between the magnetic module disposed inside the third housing and the support plate.

According to an embodiment, the second housing or the third housing may further include a first guide groove (e.g., the third guide groove 531a of FIG. 15) formed on one surface of the support plate. In an embodiment, the magnetic module disposed inside the second housing or the magnetic module disposed inside the third housing may be disposed on the first guide groove.

According to an embodiment, the second housing or the third housing may further include a protruding region (e.g., the third protruding portion 531b of FIG. 15) that protrudes from the other surface of the support plate at a position corresponding to the first guide groove.

According to an embodiment, the second housing or the third housing may further include a support wall (e.g., the support walls 593b, 593c of FIG. 8 and/or FIGS. 10 to 16) protruding from one surface of the support plate and extending in a designated direction. In an embodiment, the magnetic module disposed inside the second housing may be disposed between the support wall and the battery disposed inside the second housing, and/or the magnetic module disposed inside the third housing may be disposed between the support wall and the battery disposed inside the third housing.

According to an embodiment, the second housing or the third housing may further include an adhesive (e.g., the adhesive AH of FIG. 13) disposed between the magnetic module disposed inside the second housing and the support wall or between the magnetic module disposed inside the third housing and the support wall.

According to an embodiment, the second housing or the third housing may further include a second guide groove (e.g., the second guide groove 521a of FIG. 13) formed on one surface of the support wall. In an embodiment, the magnetic module disposed inside the second housing or the magnetic module disposed inside the third housing may be disposed on the second guide groove.

According to an embodiment, the electronic device as described above may further include a display (e.g., the display 202 of FIG. 2 or FIG. 10). In an embodiment, the display may be a flexible display including a first display region (e.g., the first display region 202a of FIG. 2) disposed corresponding to the first housing, a second display region (e.g., the second display region 202b of FIG. 2) disposed corresponding to the second housing, and a third display region (e.g., the third display region 202c of FIG. 2) disposed corresponding to the third housing. In an embodiment, at least a portion of the support plate may be disposed between the magnetic module disposed inside the second housing and the display, or between the magnetic module disposed inside the third housing and the display.

According to an embodiment, the magnetic module disposed inside the second housing or the magnetic module disposed inside the third housing may include at least one permanent magnet (e.g., the at least one magnet 691a of FIG. 17) and a bracket (e.g., the bracket 691b of FIG. 17) coupled to at least partially surround the at least one permanent magnet.

According to an embodiment, the magnetic module disposed inside the second housing or the magnetic module disposed inside the third housing may include permanent magnets, at least one dummy member (e.g., the dummy member 797 of FIG. 22) disposed between two adjacent permanent magnets, and a bracket coupled to at least partially surround at least a portion of the permanent magnets and at least a portion of the dummy member 797.

According to an embodiment, the electronic device as described above may further include a flexible printed circuit board (e.g., the flexible printed circuit board 795 of FIG. 21) that is at least partially disposed between two adjacent permanent magnets.

According to an embodiment, the electronic device (e.g., the electronic devices 101, 200, 400, and 800 of FIGS. 1 to 7 and/or FIGS. 23 to 25) may include: a first housing (e.g., the first housing 810 of FIG. 23 and/or FIG. 25); a second housing (e.g., the second housing 820 of FIG. 23 and/or FIG. 25) rotatably coupled to one side of the first housing and configured to rotate between a position facing one surface of the first housing and a position extended side by side with the one side of the first housing; a third housing (e.g., the third housing 830 of FIG. 23 and/or FIG. 25) rotatably coupled to the other side of the first housing and configured to rotate between a position facing the other surface of the first housing and a position extended side by side with the other side of the first housing; a first battery (e.g., the first battery 803a of FIG. 23 and/or FIG. 25) disposed inside the first housing; a first magnetic module (e.g., the first magnetic module 891a of FIG. 23 and/or FIG. 25) disposed inside the first housing and disposed to directly face or directly contact the first battery; at least one second battery (e.g., the second battery 803b of FIG. 23 and/or FIG. 25) disposed inside at least one of the second housing and the third housing; and at least one second magnetic module (e.g., the second magnetic module 891b of FIG. 23 and/or FIG. 25) disposed inside the at least one of the second housing and the third housing and disposed to directly face or directly contact the second battery. In an embodiment, when the at least one of the second housing and the third housing is disposed to face the first housing, the first magnetic module and the second magnetic module may be configured to generate attractive force.

According to an embodiment, the electronic device may include: a first housing; a second housing rotatably coupled to one side of the first housing and configured to rotate between a position facing one surface of the first housing and a position extended side by side with the one side of the first housing; a third housing rotatably coupled to the other side of the first housing and configured to rotate between a position facing the other surface of the first housing and a position extended side by side with the other side of the first housing; a first battery disposed inside the first housing; a first magnetic module disposed inside the first housing and disposed to directly face or directly contact the first battery; at least one second battery disposed inside the second housing; and at least one second magnetic module disposed inside the second housing and disposed to directly face or directly contact the second battery. In an embodiment, when the second housing is disposed to face the first housing, the first magnetic module and the second magnetic module may be configured to generate attractive force.

According to an embodiment, the electronic device may include: a first housing; a second housing rotatably coupled to one side of the first housing and configured to rotate between a position facing one surface of the first housing and a position extended side by side with the one side of the first housing; a third housing rotatably coupled to the other side of the first housing and configured to rotate between a position facing the other surface of the first housing and a position extended side by side with the other side of the first housing; a first battery disposed inside the first housing; a first magnetic module disposed inside the first housing and disposed to directly face or directly contact the first battery; at least one second battery disposed inside at least one of the second housing and the third housing; and at least one second magnetic module disposed inside the at least one of the second housing and the third housing and disposed to directly face or directly contact the second battery. In an embodiment, when the at least one of the second housing and the third housing is disposed to face the first housing, the at least one of the second housing and the third housing is held against the first housing by a magnetic force generated between the first magnetic module and the second magnetic module.

According to an embodiment, the first magnetic module may be located adjacent to the first battery. According to an embodiment, the first magnetic module may be arranged to support the first battery. According to an embodiment, the first magnetic module may be arranged to resist a movement of the first battery with respect to the first housing

According to an embodiment, the second magnetic module may be located adjacent to the second battery. According to an embodiment, the second magnetic module may be arranged to support the second battery. According to an embodiment, the second magnetic module may be arranged to resist a movement of the second battery with respect to the second housing.

According to an embodiment, the first housing, the second housing, or the third housing may include a plate-shaped support plate (e.g., the support plates 521 and 531 of FIGS. 11 to 16), and a support wall (e.g., the support walls 593b and 593c of FIGS. 11 to 16, and/or the support walls 893a and 893b of FIGS. 23 and 25) protruding from one surface of the support plate and extending in a designated direction. In an embodiment, the first magnetic module and the first battery, or the second magnetic module and the second battery, may be disposed on the support plate.

According to an embodiment, the first magnetic module may be disposed between the support wall and the first battery, and/or the second magnetic module may be disposed between the support wall and the second battery.

According to an embodiment, the first housing, the second housing, or the third housing may further include a first guide groove (e.g., the third guide groove 531a of FIG. 15) formed on one surface of the support plate. In an embodiment, the first magnetic module (591a) or the second magnetic module may be disposed on the first guide groove.

According to an embodiment, the first housing, the second housing, or the third housing may further include a protruding region (e.g., the third protruding portion 531b of FIG. 15) protruding from the other surface of the support plate at a position corresponding to the first guide groove.

According to an embodiment, the first housing, the second housing, or the third housing may further include an adhesive (e.g., the adhesive AH of FIG. 15) disposed between the first magnetic module and the support plate, or between the second magnetic module and the support plate.

According to an embodiment, the first housing, the second housing, or the third housing may further include a second guide groove (e.g., the second guide groove 521a of FIG. 13) formed on one surface of the support wall. In an embodiment, the first magnetic module or the second magnetic module may be disposed on the second guide groove.

According to an embodiment, the first housing, the second housing, or the third housing may further include an adhesive (e.g., the adhesive AH of FIG. 13) disposed between the first magnetic module and the support wall, or between the second magnetic module and the support wall.

The above disclosure has been described by way of example with reference to an embodiment, but it should be understood that the embodiment is illustrative rather than limiting. It will be apparent to those skilled in the art that various modifications in form and detail may be made without departing from the spirit and scope of the disclosure, as defined by the appended claims and their equivalents. For example, when one of the magnetic modules includes a permanent magnet, another of the magnetic module may be a magnetic material. The term "magnetic material" may refer to an object that includes a substance capable of generating attraction when placed within a specified distance from the permanent magnet. In this case, the magnetic module including the permanent magnet may be in the form of a component assembled on a housing and may be disposed adjacent to a battery as described above. In an embodiment, a magnetic module implemented with a magnetic material may be a part of the housing or may be integrally formed with the housing. In an embodiment, a magnetic module that is integrally formed with the housing and/or implemented as a magnetic material may be part of a structure configured to support or protect the battery.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device (100; 200; 400;500), comprising:
a first housing (510);
a second housing (520) rotatably coupled to one side of the first housing and configured to rotate between a position facing the first housing and a position extended side by side with the one side of the first housing;
a third housing (530) rotatably coupled to the other side of the first housing and configured to rotate between a position facing the first housing while being disposed between the first housing and the second housing and a position extended side by side with the other side of the first housing;
a battery (503b) disposed inside the second housing;
a magnetic module (591b) disposed inside the second housing to directly face or directly contact the battery disposed inside the second housing;
a battery (503c) disposed inside the third housing; and
a magnetic module (591c) disposed inside the third housing to directly face or directly contact the battery disposed inside the third housing, and
wherein when the third housing is disposed between the second housing and the first housing to face the first housing, the magnetic module disposed inside the second housing and the magnetic module disposed inside the third housing are configured to generate an attractive force.

2. The electronic device according to claim 1, wherein the second housing or the third housing includes a plate-shaped support plate (521, 531), and
wherein the magnetic module disposed inside the second housing and the battery disposed inside the second housing, or the magnetic module disposed inside the third housing and the battery disposed inside the third housing, are disposed on the support plate.

3. The electronic device according to claim 2, wherein the second housing or the third housing further includes an adhesive (AH) disposed between the magnetic module disposed inside the second housing and the support plate or between the magnetic module disposed inside the third housing and the support plate.

4. The electronic device according to any one of claims 2 to 3, wherein the second housing or the third housing further includes a first guide groove (531a) formed on one surface of the support plate, and
wherein the magnetic module disposed inside the second housing or the magnetic module disposed inside the third housing is disposed on the first guide groove.

5. The electronic device according to claim 4, wherein the second housing or the third housing further includes a protruding region (531b) protruding from the other surface of the support plate at a position corresponding to the first guide groove.

6. The electronic device according to any one of claims 2 to 5, wherein the second housing or the third housing further includes a support wall (593b, 593c) protruding from one surface of the support plate (593b, 593c) and extending in a designated direction, and
wherein the magnetic module disposed inside the second housing is disposed between the support wall and the battery disposed inside the second housing, or the magnetic module disposed inside the third housing is disposed between the support wall and the battery disposed inside the third housing.

7. The electronic device according to claim 6, wherein the second housing or the third housing further includes an adhesive (AH) disposed between the magnetic module disposed inside the second housing and the support wall or between the magnetic module disposed inside the third housing and the support wall.

8. The electronic device according to any one of claims 6 to 7, wherein the second housing or the third housing further includes a second guide groove (521a) formed on one surface of the support wall, and
wherein the magnetic module disposed inside the second housing or the magnetic module disposed inside the third housing is disposed on the second guide groove.

9. The electronic device according to any one of claims 2 to 8, further comprising:
a display (202) including a first display region (202a) corresponding to the first housing, a second display region (202b) corresponding to the second housing, and a third display region (202c) corresponding to the third housing, and
wherein at least a portion of the support plate is disposed between the magnetic module disposed inside the second housing and the display, or between the magnetic module disposed inside the third housing and the display,

10. The electronic device according to any one of claims 1 to 9, wherein the magnetic module disposed inside the second housing and/or the magnetic module disposed inside the third housing comprises:
at least one permanent magnet (691a; 793); and
a bracket coupled to at least partially surround the at least one permanent magnet.

11. The electronic device according to any one of claims 1 to 9, wherein the magnetic module disposed inside the second housing and/or the magnetic module disposed inside the third housing comprises:
permanent magnets (793);
at least one dummy member (797) disposed between two adjacent ones of the permanent magnets; and
a bracket coupled to surround at least a portion of the permanent magnets and at least a portion of the dummy member.

12. The electronic device according to claim 11, further comprising:
a flexible printed circuit board (795) disposed at least partially between two adjacent ones of the permanent magnets.

13. An electronic device (101; 200; 400; 800), comprising:
a first housing (810);
a second housing (820) rotatably coupled to one side of the first housing and configured to rotate between a position facing one surface of the first housing and a position extended side by side with the one side of the first housing;
a third housing (830) rotatably coupled to the other side of the first housing and configured to rotate between a position facing the other surface of the first housing and a position extended side by side with the other side of the first housing;
a first battery (803a) disposed inside the first housing;
a first magnetic module (891a) disposed inside the first housing to directly face or directly contact the first battery;
at least one second battery (803b) disposed inside at least one of the second housing and the third housing; and
at least one second magnetic module (891b) disposed inside the at least one of the second housing and the third housing to directly face or directly contact the second battery,
wherein when the at least one of the second housing and the third housing is disposed to face the first housing, the first magnetic module and the second magnetic module are configured to generate an attractive force.

14. The electronic device according to claim 13, wherein the first housing, the second housing, or the third housing includes:
a plate-shaped support plate (521, 531); and
a support wall (593b, 593c) protruding from one surface of the support plate and extending in a designated direction,
wherein the first magnetic module and the first battery, or the second magnetic module and the second battery, are disposed on the support plate.

15. The electronic device according to claim 14, wherein the first magnetic module is disposed between the support wall and the first battery, or the second magnetic module is disposed between the support wall and the second battery.
